# EUROPEAN PATENT APPLICATION

(11) **EP 4 697 796 A1**
(43) Date of publication of application: **18.02.2026**
(21) Application number: 24802842.5
(22) Date of filing: 29.04.2024
(51) Int. Cl.: H04W 28/06, H04W 28/02, H04L 67/51, H04L 67/60, G06F 18/23, H04W 4/38

(54) **COMMUNICATION METHOD AND APPARATUS**

(30) Priority: 06.05.2023 CN 202310505943
(71) Applicant: Huawei Technologies Co., Ltd., Shenzhen, Guangdong 518129 (CN)
(72) Inventor: YING, Jiangwei, Shenzhen, Guangdong 518129 (CN); ZHU, Fangyuan, Shenzhen, Guangdong 518129 (CN); XU, Shengfeng, Shenzhen, Guangdong 518129 (CN); WU, Yizhuang, Shenzhen, Guangdong 518129 (CN)
(74) Representative: Pfenning, Meinig & Partner mbB
(86) International application number: PCT/CN2024/090641
(87) International publication number: WO 2024/230559

(57) **Abstract**

This application pertains to the field of communication technologies, and provides a communication method and apparatus, to reduce sensing resource overheads. In the method, a sensing function or a sensing device may obtain N classification results by classifying sensing requirements of M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved.

## Description

This application claims priority to Chinese Patent Application No. 202310505943.9, filed with the China National Intellectual Property Administration on May 6, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, a network side, for example, a sensing function, may receive sensing service requests from a plurality of sensing applications, and generate a corresponding sensing control request for each sensing service request. The network side sends a plurality of corresponding sensing control requests to a sensing device, and the sensing device may perform sensing operations based on the received sensing control requests.

However, with large-scale application of sensing services, how to reduce sensing resource overheads is an urgent problem to be resolved.

### SUMMARY

Embodiments of this application provide a communication method and apparatus, to reduce sensing resource overheads.

To achieve the foregoing objective, this application uses the following technical solutions.

According to a first aspect, a communication method is provided. The method includes: A sensing function receives M sensing service requests, obtains N classification results based on sensing requirements of M sensing services, and sends a sensing control request to a sensing device. The M sensing service requests are in one-to-one correspondence with the M sensing services, and the sensing service request includes a sensing requirement corresponding to the sensing service. An i^{th} classification result in the N classification results indicates a sensing requirement of an i^{th} type of sensing service, i is any integer from 1 to N, the i^{th} type of sensing service includes at least one of the M sensing services, and M is greater than N. The sensing control request includes the N sensing classification results, and the sensing control request is used by the sensing device to obtain N types of sensing measurement data corresponding to the N classification results.

It can be learned from methods according to the first aspect and the second aspect that the sensing function may obtain the N classification results by classifying the sensing requirements of the M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved. In addition, a quantity of sensing control requests sent by the sensing function to the sensing device may be any integer from 1 to N. Therefore, compared with a conventional technology in which the sensing function needs to send M sensing control requests to the sensing device for the M sensing service requests, signaling resource overheads can be reduced. If one sensing control request is for one type of sensing service, N sensing control requests exist. Alternatively, if one sensing control request is for all types of sensing services, one sensing control request exists.

In a possible design scheme, the i^{th} classification result further indicates the i^{th} type of sensing service. In other words, the i^{th} classification result may include the i^{th} type of sensing service. In this way, the sensing function may determine which sensing services in the M sensing services are sensing services included in the i^{th} classification result.

In a possible design scheme, the sensing requirement of the i^{th} type of sensing service is used to meet a sensing requirement of any sensing service in the i^{th} type of sensing service. In other words, the sensing device performs sensing based on the sensing requirement of the i^{th} type of sensing service, and obtained sensing measurement data can meet the sensing requirement of any sensing service in the i^{th} type of sensing service. In this way, corresponding sensing measurement data can be accurately obtained for each of the M sensing services.

Optionally, the sensing requirement of the i^{th} type of sensing service is used by a device for performing sensing to perform a sensing operation based on the sensing requirement of the i^{th} type of sensing service. In other words, the sensing device needs to perform sensing based on the sensing requirement of the i^{th} type of sensing service. In this way, sensing resource overheads can be reduced, and communication efficiency can be improved.

Optionally, the i^{th} classification result further includes an i^{th} classification identifier, and the i^{th} classification identifier is used to identify the i^{th} type of sensing service and/or the sensing requirement of the i^{th} type of sensing service. In other words, the i^{th} classification identifier may flexibly indicate the i^{th} type of sensing service and/or the sensing requirement of the i^{th} type of sensing service.

Optionally, after the sensing function sends the sensing control request to the sensing device, the method according to the first aspect may further include: The sensing function receives a sensing control response returned by the sensing device for the sensing control request. The sensing control response includes N classification identifiers, and an i^{th} classification identifier in the N classification identifiers is used to identify the i^{th} type of sensing service and/or the sensing requirement of the i^{th} type of sensing service. In other words, the i^{th} classification identifier may flexibly indicate the i^{th} type of sensing service and/or the sensing requirement of the i^{th} type of sensing service. If one sensing control response is for one type of sensing service, N sensing control responses exist. Alternatively, if one sensing control response is for all types of sensing services, one sensing control response exists.

In a possible design scheme, the method according to the first aspect may further include: The sensing function receives the N types of sensing measurement data from the sensing device, and processes the N types of sensing measurement data to obtain respective sensing measurement data or sensing results of the M sensing services. The N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result. In other words, the sensing device may obtain the respective sensing measurement data of the M sensing services before classification by using the N types of sensing measurement data. Therefore, sensing resource overheads can be effectively reduced.

Optionally, N data transmission channels are established between the sensing function and the sensing device, and that the sensing function receives the N types of sensing measurement data from the sensing device includes: The sensing function receives the i^{th} type of sensing measurement data in the N types of sensing measurement data from the sensing device through an i^{th} data transmission channel in the N data transmission channels. In other words, each of the N data transmission channels is used to transmit sensing measurement data of one type of sensing service. In this way, the sensing function may determine a specific type of sensing service to which received sensing measurement data belongs, to improve efficiency of identifying and processing the sensing measurement data.

Optionally, one data transmission channel is established between the sensing function and the sensing device, and that the sensing function receives the N types of sensing measurement data from the sensing device includes: The sensing function receives the N types of sensing measurement data from the sensing device through the data transmission channel. The i^{th} type of sensing measurement data in the N types of sensing measurement data is identified by the i^{th} classification. In other words, the N types of sensing measurement data are transmitted between the sensing function and the sensing device by using a general-purpose data transmission channel, so that overheads of maintaining and managing the data transmission channel can be reduced. In addition, in this case, each data packet of the i^{th} type of sensing measurement data may carry the i^{th} classification identifier. In this way, the sensing device may determine, based on a classification identifier carried in received sensing measurement data, a specific type of sensing service to which the sensing measurement data belongs, to avoid misidentification or incorrect identification.

Optionally, that the sensing function processes the N types of sensing measurement data to obtain the respective sensing measurement data or sensing results of the M sensing services includes: The sensing function obtains the i^{th} type of sensing service corresponding to the i^{th} type of sensing measurement data based on the i^{th} classification result and the i^{th} type of sensing measurement data; and obtains sensing measurement data corresponding to each sensing service in the i^{th} type of sensing service based on a sensing requirement corresponding to each sensing service in the i^{th} type of sensing service and the i^{th} type of sensing measurement data; or obtains a sensing result corresponding to each sensing service in the i^{th} type of sensing service based on a sensing requirement corresponding to each sensing service in the i^{th} type of sensing service and the i^{th} type of sensing measurement data. In this way, it is ensured that the sensing function can accurately obtain the sensing measurement data or the measurement result of each sensing service in the i^{th} type of sensing service.

For example, the sensing function may process the i^{th} type of sensing measurement data to obtain an i^{th} type of sensing result, and then obtain the sensing result of each sensing service in the i^{th} type of sensing service from the i^{th} type of sensing result. For another example, the sensing function obtains the sensing measurement data of each sensing service in the i^{th} type of sensing service based on the i^{th} type of sensing measurement data, and then processes the sensing measurement data of each sensing service to obtain an i^{th} sensing result. Optionally, the sensing result may alternatively be the same as the sensing measurement data. This is not limited.

Optionally, that the sensing function processes the N types of sensing measurement data to obtain the respective sensing measurement data or sensing results of the M sensing services includes: The sensing function obtains sensing measurement data corresponding to each sensing service in the i^{th} type of sensing service based on a sensing requirement corresponding to each sensing service in the i^{th} type of sensing service and the i^{th} type of sensing measurement data; or obtains a sensing result corresponding to each sensing service in the i^{th} type of sensing service based on a sensing requirement corresponding to each sensing service in the i^{th} type of sensing service and the i^{th} type of sensing measurement data. In this way, it is ensured that the sensing function can accurately obtain the sensing measurement data or the measurement result of each sensing service in the i^{th} type of sensing service.

Optionally, the sensing requirement of the sensing service includes at least one sensing parameter, and that the sensing function obtains the N classification results based on the sensing requirements of the M sensing services includes: The sensing function determines one or more sensing requirements that are in the sensing requirements of the M sensing services and that meet a preset sensing requirement as a classification result, where the preset sensing requirement is that types of sensing parameters are the same, and value ranges of the sensing parameters of the same type are within a preset range. In this way, for a type of sensing service corresponding to each classification result, sensing requirements are the same or similar, so that a sensing precision is improved.

Optionally, the sensing parameter includes at least one of the following: a sensing precision, a resolution, a refresh rate, a delay, a detection rate, a sensing area, a miss detection rate, a false alarm rate, a confidence, and a sensing moment. In this way, sensing requirements of different sensing scenarios and sensing services are met.

In a possible design scheme, that the sensing function receives the M sensing service requests includes: The sensing function receives the M sensing service requests from a network function or a terminal device. The network function includes at least one of the following: an access and mobility management network element, a gateway mobile sensing center, a network exposure network element, a sensing client, or an application function, to be applicable to more service scenarios.

According to a second aspect, a communication method is provided. The method includes: A sensing device receives a sensing control request from a sensing function, and performs a sensing operation based on N classification results to obtain N types of sensing measurement data. The sensing control request includes the N classification results, an i^{th} classification result in the N classification results indicates a sensing requirement of an i^{th} type of sensing service, the i^{th} type of sensing service is obtained by the sensing function by performing classification based on a sensing requirement of at least one sensing service, and the sensing control request is used by the sensing device to obtain the N types of sensing measurement data corresponding to the N classification results. The N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result.

In a possible design scheme, the i^{th} classification result further indicates the i^{th} type of sensing service. In other words, the i^{th} classification result may include the i^{th} type of sensing service.

In a possible design scheme, the sensing requirement of the i^{th} type of sensing service is used to meet a sensing requirement of any sensing service in the i^{th} type of sensing service.

Optionally, the sensing requirement of the i^{th} type of sensing service is used by a device for performing sensing to perform a sensing operation based on the sensing requirement of the i^{th} type of sensing service.

Optionally, the i^{th} classification result further includes an i^{th} classification identifier, and the i^{th} classification identifier is used to identify the i^{th} type of sensing service and/or the sensing requirement of the i^{th} type of sensing service.

Optionally, after the sensing device receives the sensing control request from the sensing function, the method according to the second aspect may further include: The sensing device sends, to the sensing function, a sensing control response returned for the sensing control request. The sensing control response includes N classification identifiers, and an i^{th} classification identifier in the N classification identifiers is used to identify the i^{th} type of sensing service and/or the sensing requirement of the i^{th} type of sensing service.

In a possible design scheme, the method according to the second aspect may further include: The sensing device sends the N types of sensing measurement data to the sensing function.

Optionally, N data transmission channels are established between the sensing function and the sensing device, and that the sensing device sends the N types of sensing measurement data to the sensing function includes: The sensing device sends the i^{th} type of sensing measurement data in the N types of sensing measurement data to the sensing function through an i^{th} data transmission channel in the N data transmission channels.

Optionally, one data transmission channel is established between the sensing function and the sensing device, and that the sensing device sends the N types of sensing measurement data to the sensing function includes: The sensing device sends the N types of sensing measurement data to the sensing function through the data transmission channel. The i^{th} type of sensing measurement data in the N types of sensing measurement data is identified by the i^{th} classification identifier.

In addition, for other technical effect of the method according to the second aspect, refer to the technical effect of the method according to the first aspect. Details are not described herein again.

According to a third aspect, a communication method is provided. The method includes: A sensing device receives a sensing control request from a sensing function, obtains N classification results based on sensing requirements of M sensing services, and performs a sensing operation based on the N classification results to obtain N types of sensing measurement data. The sensing control request includes the sensing requirements of the M sensing services. An i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N. The N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result.

It can be learned from methods according to the third aspect and the fourth aspect that the sensing device may obtain the N classification results by classifying the sensing requirements of the M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved.

In a possible design scheme, the sensing requirement of the i^{th} type of sensing service is used to meet a sensing requirement of any sensing service in the i^{th} type of sensing service.

In a possible design scheme, the sensing requirement of the i^{th} type of sensing service is used by a device for performing sensing to perform a sensing operation based on the sensing requirement of the i^{th} type of sensing service.

Optionally, after the sensing device receives the sensing control request from the sensing function, the method according to the third aspect may further include: The sensing device sends, to the sensing function, a sensing control response returned for the sensing control request. The sensing control response includes N types of sensing services corresponding to the N classification results, and the i^{th} classification result in the N classification results includes the i^{th} type of sensing service in the N types of sensing services. In this way, the sensing function may determine which sensing services in the M sensing services are sensing services included in the i^{th} classification result.

Optionally, the sensing control response further includes sensing requirements of the N types of sensing services corresponding to the N classification results, and the i^{th} classification result in the N classification results includes the sensing requirement of the i^{th} type of sensing service in the sensing requirements of the N types of sensing services. In this way, the sensing function may determine the sensing requirement of the i^{th} type of sensing service. Optionally, the sensing control response further includes N classification identifiers, and an i^{th} classification identifier in the N classification identifiers is used to identify the i^{th} type of sensing service and/or the sensing requirement of the i^{th} type of sensing service. In other words, the i^{th} classification identifier may flexibly indicate the i^{th} type of sensing service and/or the sensing requirement of the i^{th} type of sensing service.

Optionally, after the sensing device sends, to the sensing function, the sensing control response returned for the sensing control request, the method according to the third aspect may further include: The sensing device receives a response message returned by the sensing function for the sensing control response. The response message includes the N classification identifiers, and the i^{th} classification identifier in the N classification identifiers is used to identify the i^{th} type of sensing service and/or the sensing requirement of the i^{th} type of sensing service. In other words, the i^{th} classification identifier may flexibly indicate the i^{th} type of sensing service and/or the sensing requirement of the i^{th} type of sensing service.

In a possible design scheme, the method according to the third aspect may further include: The sensing device sends the N types of sensing measurement data to the sensing function.

Optionally, N data transmission channels are established between the sensing function and the sensing device, and that the sensing device sends the N types of sensing measurement data to the sensing function includes: The sensing device sends the i^{th} type of sensing measurement data in the N types of sensing measurement data to the sensing function through an i^{th} data transmission channel in the N data transmission channels.

Optionally, one data transmission channel is established between the sensing function and the sensing device, and that the sensing device sends the N types of sensing measurement data to the sensing function includes: The sensing device sends the N types of sensing measurement data to the sensing function through the data transmission channel. The i^{th} type of sensing measurement data in the N types of sensing measurement data is identified by the i^{th} classification identifier.

Optionally, that the sensing device obtains the N classification results based on the sensing requirements of the M sensing services includes: The sensing device determines one or more sensing requirements that are in the sensing requirements of the M sensing services and that meet a preset sensing requirement as a classification result, where the preset sensing requirement is that types of sensing parameters are the same, and value ranges of the sensing parameters of the same type are within a preset range. In this way, for a type of sensing service corresponding to each classification result, sensing requirements are the same or similar, so that a sensing precision is improved.

Optionally, the type of the sensing parameter includes at least one of the following: a sensing precision, a resolution, a refresh rate, a delay, a detection rate, a sensing area, a miss detection rate, a false alarm rate, a confidence, and a sensing moment. In this way, sensing requirements of different sensing scenarios and sensing services are met.

In addition, for other technical effect of the method according to the third aspect, refer to the technical effect of the method according to the first aspect. Details are not described herein again.

According to a fourth aspect, a communication method is provided. The method includes: A sensing function sends a sensing control request to a sensing device, and receives N types of sensing measurement data from the sensing device. The sensing control request includes sensing requirements of M sensing services. The N types of sensing measurement data are obtained by the sensing device by performing a sensing operation based on N classification results, the N classification results are obtained by the sensing device by classifying the sensing requirements of the M sensing services, an i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N.

In a possible design scheme, the sensing requirement of the i^{th} type of sensing service is used to meet a sensing requirement of any sensing service in the i^{th} type of sensing service.

In a possible design scheme, the sensing requirement of the i^{th} type of sensing service is used by a device for performing sensing to perform a sensing operation based on the sensing requirement of the i^{th} type of sensing service.

Optionally, after the sensing function sends the sensing control request to the sensing device, the method according to the fourth aspect may further include: The sensing function receives a sensing control response returned by the sensing device for the sensing control request. The sensing control response includes N types of sensing services corresponding to the N classification results, and the i^{th} classification result in the N classification results includes the i^{th} type of sensing service in the N types of sensing services.

Optionally, the sensing control response further includes sensing requirements of the N types of sensing services corresponding to the N classification results, and the i^{th} classification result in the N classification results includes the sensing requirement of the i^{th} type of sensing service in the sensing requirements of the N types of sensing services.

Optionally, the sensing control response further includes N classification identifiers, and an i^{th} classification identifier in the N classification identifiers is used to identify the i^{th} type of sensing service and/or the sensing requirement of the i^{th} type of sensing service.

Optionally, after the sensing function receives the sensing control response returned by the sensing device for the sensing control request, the method according to the fourth aspect may further include: The sensing function sends, to the sensing device, a response message returned for the sensing control response. The response message includes the N classification identifiers, and the i^{th} classification identifier in the N classification identifiers is used to identify the i^{th} type of sensing service and/or the sensing requirement of the i^{th} type of sensing service.

Optionally, N data transmission channels are established between the sensing function and the sensing device, and that the sensing function receives the N types of sensing measurement data from the sensing device includes: The sensing function receives an i^{th} type of sensing measurement data in the N types of sensing measurement data from the sensing device through an i^{th} data transmission channel in the N data transmission channels.

Optionally, one data transmission channel is established between the sensing function and the sensing device, and that the sensing function receives the N types of sensing measurement data from the sensing device includes: The sensing function receives the N types of sensing measurement data from the sensing device through the data transmission channel. The i^{th} type of sensing measurement data in the N types of sensing measurement data is identified by the i^{th} classification.

In a possible design scheme, the method according to the fourth aspect may further include: The sensing function processes the N types of sensing measurement data to obtain respective sensing measurement data or sensing results of the M sensing services.

Optionally, that the sensing function processes the N types of sensing measurement data to obtain the respective sensing measurement data or sensing results of the M sensing services includes: The sensing function obtains the i^{th} type of sensing service corresponding to the i^{th} type of sensing measurement data based on the i^{th} classification result and the i^{th} type of sensing measurement data; and obtains sensing measurement data corresponding to each sensing service in the i^{th} type of sensing service based on a sensing requirement corresponding to each sensing service in the i^{th} type of sensing service and the i^{th} type of sensing measurement data; or obtains a sensing result corresponding to each sensing service in the i^{th} type of sensing service based on a sensing requirement corresponding to each sensing service in the i^{th} type of sensing service and the i^{th} type of sensing measurement data.

Optionally, that the sensing function processes the N types of sensing measurement data to obtain the respective sensing measurement data or sensing results of the M sensing services includes: The sensing function obtains sensing measurement data corresponding to each sensing service in the i^{th} type of sensing service based on a sensing requirement corresponding to each sensing service in the i^{th} type of sensing service and the i^{th} type of sensing measurement data; or obtains a sensing result corresponding to each sensing service in the i^{th} type of sensing service based on a sensing requirement corresponding to each sensing service in the i^{th} type of sensing service and the i^{th} type of sensing measurement data.

In addition, for other technical effect of the method according to the fourth aspect, refer to the technical effect of the method according to the third aspect. Details are not described herein again.

According to a fifth aspect, a communication apparatus is provided. The apparatus includes modules configured to perform the method according to the first aspect, for example, a transceiver module and a processing module.

The transceiver module is configured to receive M sensing service requests. The processing module is configured to obtain N classification results based on sensing requirements of M sensing services. The transceiver module is further configured to send a sensing control request to a sensing device. The M sensing service requests are in one-to-one correspondence with the M sensing services, and the sensing service request includes a sensing requirement corresponding to the sensing service. An i^{th} classification result in the N classification results indicates a sensing requirement of an i^{th} type of sensing service, i is any integer from 1 to N, the i^{th} type of sensing service includes at least one of the M sensing services, and M is greater than N. The sensing control request includes the N sensing classification results, and the sensing control request is used by the sensing device to obtain N types of sensing measurement data corresponding to the N classification results.

In a possible design scheme, the i^{th} classification result further indicates the i^{th} type of sensing service.

In a possible design scheme, the sensing requirement of the i^{th} type of sensing service is used to meet a sensing requirement of any sensing service in the i^{th} type of sensing service.

Optionally, the sensing requirement of the i^{th} type of sensing service is used by a device for performing sensing to perform a sensing operation based on the sensing requirement of the i^{th} type of sensing service.

Optionally, the i^{th} classification result further includes an i^{th} classification identifier, and the i^{th} classification identifier is used to identify the i^{th} type of sensing service and/or the sensing requirement of the i^{th} type of sensing service.

Optionally, the transceiver module is further configured to: after the communication apparatus according to the fifth aspect sends the sensing control request to the sensing device, receive a sensing control response returned by the sensing device for the sensing control request. The sensing control response includes N classification identifiers, and an i^{th} classification identifier in the N classification identifiers is used to identify the i^{th} type of sensing service and/or the sensing requirement of the i^{th} type of sensing service.

In a possible design scheme, the transceiver module is further configured to receive the N types of sensing measurement data from the sensing device. The processing module is further configured to process the N types of sensing measurement data to obtain respective sensing measurement data or sensing results of the M sensing services. The N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result.

Optionally, N data transmission channels are established between the communication apparatus according to the fifth aspect and the sensing device, and the transceiver module is further configured to receive the i^{th} type of sensing measurement data in the N types of sensing measurement data from the sensing device through an i^{th} data transmission channel in the N data transmission channels.

Optionally, one data transmission channel is established between the communication apparatus according to the fifth aspect and the sensing device, and the transceiver module is further configured to receive the N types of sensing measurement data from the sensing device through the data transmission channel. The i^{th} type of sensing measurement data in the N types of sensing measurement data is identified by the i^{th} classification.

Optionally, the processing module is further configured to obtain the i^{th} type of sensing service corresponding to the i^{th} type of sensing measurement data based on the i^{th} classification result and the i^{th} type of sensing measurement data. The processing module is further configured to obtain sensing measurement data corresponding to each sensing service in the i^{th} type of sensing service based on a sensing requirement corresponding to each sensing service in the i^{th} type of sensing service and the i^{th} type of sensing measurement data. Alternatively, the processing module is further configured to obtain a sensing result corresponding to each sensing service in the i^{th} type of sensing service based on the sensing requirement of the i^{th} type of sensing service and the i^{th} type of sensing measurement data.

Optionally, the processing module is further configured to obtain sensing measurement data corresponding to each sensing service in the i^{th} type of sensing service based on a sensing requirement corresponding to each sensing service in the i^{th} type of sensing service and the i^{th} type of sensing measurement data. Alternatively, the processing module is further configured to obtain a sensing result corresponding to each sensing service in the i^{th} type of sensing service based on a sensing requirement corresponding to each sensing service in the i^{th} type of sensing service and the i^{th} type of sensing measurement data.

Optionally, the processing module is further configured to determine one or more sensing requirements that are in the sensing requirements of the M sensing services and that meet a preset sensing requirement as a classification result. The preset sensing requirement is that types of sensing parameters are the same, and value ranges of the sensing parameters of the same type are within a preset range.

Optionally, the sensing parameter includes at least one of the following: a sensing precision, a resolution, a refresh rate, a delay, a detection rate, a sensing area, a miss detection rate, a false alarm rate, a confidence, and a sensing moment.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the communication method according to the first aspect.

It should be noted that the communication apparatus according to the fifth aspect may be a network device, for example, a sensing function, may be a chip (system) or another part or component that may be disposed in the network device, or may be an apparatus including the network device. This is not limited in this application.

In addition, for technical effect of the communication apparatus according to the fifth aspect, refer to the technical effect of the communication method according to the first aspect. Details are not described herein again.

According to a sixth aspect, a communication apparatus is provided. The apparatus includes modules configured to perform the method according to the second aspect, for example, a transceiver module and a processing module.

The transceiver module is configured to receive a sensing control request from a sensing function. The processing module is configured to perform a sensing operation based on N classification results to obtain N types of sensing measurement data. The sensing control request includes the N classification results, an i^{th} classification result in the N classification results indicates a sensing requirement of an i^{th} type of sensing service, the i^{th} type of sensing service is obtained by the sensing function by performing classification based on a sensing requirement of at least one sensing service, and the sensing control request is used by the communication apparatus according to the sixth aspect to obtain the N types of sensing measurement data corresponding to the N classification results. The N types of sensing measurement data are in one-to-one correspondence with the N classification results, and an i^{th} type of sensing measurement data in the N types of sensing measurement data is sensing measurement data that is of the i^{th} type of sensing service and that is obtained by the communication apparatus by performing sensing based on the i^{th} classification result.

In a possible design scheme, the i^{th} classification result further indicates the i^{th} type of sensing service. In other words, the i^{th} classification result may include the i^{th} type of sensing service.

In a possible design scheme, the sensing requirement of the i^{th} type of sensing service is used to meet a sensing requirement of any sensing service in the i^{th} type of sensing service.

Optionally, the sensing requirement of the i^{th} type of sensing service is used by a device for performing sensing to perform a sensing operation based on the sensing requirement of the i^{th} type of sensing service.

Optionally, the i^{th} classification result further includes an i^{th} classification identifier, and the i^{th} classification identifier is used to identify the i^{th} type of sensing service and/or the sensing requirement of the i^{th} type of sensing service.

Optionally, after the communication apparatus according to the sixth aspect receives the sensing control request from the sensing function, the transceiver module is further configured to send, to the sensing function, a sensing control response returned for the sensing control request. The sensing control response includes N classification identifiers, and an i^{th} classification identifier in the N classification identifiers is used to identify the i^{th} type of sensing service and/or the sensing requirement of the i^{th} type of sensing service.

In a possible design scheme, the transceiver module is further configured to send the N types of sensing measurement data to the sensing function.

Optionally, N data transmission channels are established between the sensing function and the communication apparatus according to the sixth aspect, and the transceiver module is further configured to send the i^{th} type of sensing measurement data in the N types of sensing measurement data to the sensing function through an i^{th} data transmission channel in the N data transmission channels.

Optionally, one data transmission channel is established between the sensing function and the communication apparatus according to the sixth aspect, and the transceiver module is further configured to send the N types of sensing measurement data to the sensing function through the data transmission channel. The i^{th} type of sensing measurement data in the N types of sensing measurement data is identified by the i^{th} classification identifier.

Optionally, the processing module is further configured to obtain the i^{th} type of sensing service corresponding to the i^{th} type of sensing measurement data based on the i^{th} classification result and the i^{th} type of sensing measurement data. The processing module is further configured to obtain sensing measurement data corresponding to each sensing service in the i^{th} type of sensing service based on a sensing requirement corresponding to each sensing service in the i^{th} type of sensing service and the i^{th} type of sensing measurement data. Alternatively, the processing module is further configured to obtain a sensing result corresponding to each sensing service in the i^{th} type of sensing service based on a sensing requirement corresponding to each sensing service in the i^{th} type of sensing service and the i^{th} type of sensing measurement data.

In a possible design scheme, the transceiver module is further configured to receive M sensing service requests from a network function or a terminal device. The network function includes at least one of the following: an access and mobility management network element, a gateway mobile sensing center, a network exposure network element, a sensing client, or an application function.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the communication method according to the second aspect.

It should be noted that the communication apparatus according to the sixth aspect may be a terminal or a network device, may be a chip (system) or another part or component that may be disposed in the terminal or the network device, or may be an apparatus including the terminal or the network device. This is not limited in this application.

In addition, for technical effect of the communication apparatus according to the sixth aspect, refer to the technical effect of the communication method according to the second aspect. Details are not described herein again.

According to a seventh aspect, a communication apparatus is provided. The apparatus includes modules configured to perform the method according to the third aspect, for example, a transceiver module and a processing module.

The transceiver module is configured to receive a sensing control request from a sensing function. The processing module is configured to obtain N classification results based on sensing requirements of M sensing services. The processing module is further configured to perform a sensing operation based on N classification results to obtain N types of sensing measurement data. The sensing control request includes the sensing requirements of the M sensing services. An i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N. The N types of sensing measurement data are in one-to-one correspondence with the N classification results, and an i^{th} type of sensing measurement data in the N types of sensing measurement data is sensing measurement data that is of the i^{th} type of sensing service and that is obtained by the communication apparatus according to the seventh aspect by performing sensing based on the i^{th} classification result.

In a possible design scheme, the sensing requirement of the i^{th} type of sensing service is used to meet a sensing requirement of any sensing service in the i^{th} type of sensing service.

In a possible design scheme, the sensing requirement of the i^{th} type of sensing service is used by a device for performing sensing to perform a sensing operation based on the sensing requirement of the i^{th} type of sensing service.

Optionally, after the communication apparatus according to the seventh aspect receives the sensing control request from the sensing function, the transceiver module is further configured to send, to the sensing function, a sensing control response returned for the sensing control request. The sensing control response includes N types of sensing services corresponding to the N classification results, and the i^{th} classification result in the N classification results includes the i^{th} type of sensing service in the N types of sensing services.

Optionally, the sensing control response further includes sensing requirements of the N types of sensing services corresponding to the N classification results, and the i^{th} classification result in the N classification results includes the sensing requirement of the i^{th} type of sensing service in the sensing requirements of the N types of sensing services.

Optionally, the sensing control response further includes N classification identifiers, and an i^{th} classification identifier in the N classification identifiers is used to identify the i^{th} type of sensing service and/or the sensing requirement of the i^{th} type of sensing service.

Optionally, after the communication apparatus according to the seventh aspect sends, to the sensing function, the sensing control response returned for the sensing control request, the transceiver module receives a response message returned by the sensing function for the sensing control response. The response message includes the N classification identifiers, and the i^{th} classification identifier in the N classification identifiers is used to identify the i^{th} type of sensing service and/or the sensing requirement of the i^{th} type of sensing service.

In a possible design scheme, the transceiver module is further configured to send the N types of sensing measurement data to the sensing function.

Optionally, N data transmission channels are established between the sensing function and the communication apparatus according to the seventh aspect, and the transceiver module is further configured to send the i^{th} type of sensing measurement data in the N types of sensing measurement data to the sensing function through an i^{th} data transmission channel in the N data transmission channels.

Optionally, one data transmission channel is established between the sensing function and the communication apparatus according to the seventh aspect, and the transceiver module is further configured to send the N types of sensing measurement data to the sensing function through the data transmission channel. The i^{th} type of sensing measurement data in the N types of sensing measurement data is identified by the i^{th} classification identifier.

Optionally, the processing module is further configured to determine one or more sensing requirements that are in the sensing requirements of the M sensing services and that meet a preset sensing requirement as a classification result. The preset sensing requirement is that types of sensing parameters are the same, and value ranges of the sensing parameters of the same type are within a preset range.

Optionally, the type of the sensing parameter includes at least one of the following: a sensing precision, a resolution, a refresh rate, a delay, a detection rate, a sensing area, a miss detection rate, a false alarm rate, a confidence, and a sensing moment.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus is enabled to perform the communication method according to the third aspect.

It should be noted that the communication apparatus according to the seventh aspect may be a terminal or a network device, may be a chip (system) or another part or component that may be disposed in the terminal or the network device, or may be an apparatus including the terminal or the network device. This is not limited in this application.

In addition, for technical effect of the communication apparatus according to the seventh aspect, refer to the technical effect of the communication method according to the third aspect. Details are not described herein again.

According to an eighth aspect, a communication apparatus is provided. The apparatus includes modules configured to perform the method according to the fourth aspect, for example, a transceiver module and a processing module.

The transceiver module is configured to send a sensing control request to a sensing device. The transceiver module is further configured to receive N types of sensing measurement data from the sensing device. The sensing control request includes sensing requirements of M sensing services. The N types of sensing measurement data are obtained by the sensing device by performing a sensing operation based on N classification results, the N classification results are obtained by the sensing device by classifying the sensing requirements of the M sensing services, an i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N.

In a possible design scheme, the sensing requirement of the i^{th} type of sensing service is used to meet a sensing requirement of any sensing service in the i^{th} type of sensing service.

In a possible design scheme, the sensing requirement of the i^{th} type of sensing service is used by a device for performing sensing to perform a sensing operation based on the sensing requirement of the i^{th} type of sensing service.

Optionally, the transceiver module is further configured to: after the communication apparatus according to the eighth aspect sends the sensing control request to the sensing device, receive a sensing control response returned by the sensing device for the sensing control request. The sensing control response includes N types of sensing services corresponding to the N classification results, and the i^{th} classification result in the N classification results includes the i^{th} type of sensing service in the N types of sensing services.

Optionally, the sensing control response further includes sensing requirements of the N types of sensing services corresponding to the N classification results, and the i^{th} classification result in the N classification results includes the sensing requirement of the i^{th} type of sensing service in the sensing requirements of the N types of sensing services.

Optionally, the sensing control response further includes N classification identifiers, and an i^{th} classification identifier in the N classification identifiers is used to identify the i^{th} type of sensing service and/or the sensing requirement of the i^{th} type of sensing service.

Optionally, the transceiver module is further configured to: after the communication apparatus according to the eighth aspect receives the sensing control response returned by the sensing device for the sensing control request, send, to the sensing device, a response message returned for the sensing control response. The response message includes the N classification identifiers, and the i^{th} classification identifier in the N classification identifiers is used to identify the i^{th} type of sensing service and/or the sensing requirement of the i^{th} type of sensing service.

Optionally, N data transmission channels are established between the communication apparatus according to the eighth aspect and the sensing device, and the transceiver module is further configured to receive an i^{th} type of sensing measurement data in the N types of sensing measurement data from the sensing device through an i^{th} data transmission channel in the N data transmission channels.

Optionally, one data transmission channel is established between the communication apparatus according to the eighth aspect and the sensing device, and the transceiver module is further configured to receive the N types of sensing measurement data from the sensing device through the data transmission channel. The i^{th} type of sensing measurement data in the N types of sensing measurement data is identified by the i^{th} classification.

In a possible design scheme, the processing module is configured to process the N types of sensing measurement data to obtain respective sensing measurement data or sensing results of the M sensing services.

Optionally, the processing module is further configured to obtain the i^{th} type of sensing service corresponding to the i^{th} type of sensing measurement data based on the i^{th} classification result and the i^{th} type of sensing measurement data. The processing module is further configured to obtain sensing measurement data corresponding to each sensing service in the i^{th} type of sensing service based on a sensing requirement corresponding to each sensing service in the i^{th} type of sensing service and the i^{th} type of sensing measurement data. Alternatively, the processing module is further configured to obtain a sensing result corresponding to each sensing service in the i^{th} type of sensing service based on a sensing requirement corresponding to each sensing service in the i^{th} type of sensing service and the i^{th} type of sensing measurement data.

Optionally, the processing module is further configured to obtain sensing measurement data corresponding to each sensing service in the i^{th} type of sensing service based on a sensing requirement corresponding to each sensing service in the i^{th} type of sensing service and the i^{th} type of sensing measurement data. Alternatively, the processing module is further configured to obtain a sensing result corresponding to each sensing service in the i^{th} type of sensing service based on a sensing requirement corresponding to each sensing service in the i^{th} type of sensing service and the i^{th} type of sensing measurement data.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus is enabled to perform the communication method according to the fourth aspect.

It should be noted that the communication apparatus according to the eighth aspect may be a network device, for example, a sensing function, may be a chip (system) or another part or component that may be disposed in the network device, or may be an apparatus including the network device. This is not limited in this application.

In addition, for technical effect of the communication apparatus according to the eighth aspect, refer to the technical effect of the communication method according to the fourth aspect. Details are not described herein again.

According to a ninth aspect, a communication apparatus is provided. The communication apparatus includes a processor, and the processor is configured to perform the communication method according to any one of the first aspect to the fourth aspect.

In a possible design scheme, the communication apparatus according to the ninth aspect may further include a transceiver. The transceiver may be a transceiver circuit or an interface circuit. The transceiver may be used by the apparatus to communicate with another communication apparatus.

In a possible design scheme, the communication apparatus according to the ninth aspect may further include a memory. The memory and the processor may be integrated together, or may be disposed separately. The memory may be configured to store a computer program and/or data related to the communication method according to any one of the first aspect to the fourth aspect.

In this application, the communication apparatus according to the ninth aspect may be the terminal or the network device according to the first aspect to the fourth aspect, a chip (system) or another part or component that may be disposed in the terminal or the network device, or an apparatus including the terminal or the network device.

In addition, for technical effect of the communication apparatus according to the ninth aspect, refer to the technical effect of the communication method according to any one of the first aspect to the fourth aspect. Details are not described herein again.

According to a tenth aspect, a communication apparatus is provided. The communication apparatus includes a processor. The processor is coupled to a memory. The processor is configured to execute a computer program stored in the memory, to enable the communication apparatus to perform the communication method according to any one of the first aspect to the fourth aspect.

In a possible design scheme, the communication apparatus according to the tenth aspect may further include a transceiver. The transceiver may be a transceiver circuit or an interface circuit. The transceiver may be used by the apparatus to communicate with another communication apparatus.

In this application, the communication apparatus according to the tenth aspect may be the terminal or the network device according to the first aspect to the fourth aspect, a chip (system) or another part or component that may be disposed in the terminal or the network device, or an apparatus including the terminal or the network device.

In addition, for technical effect of the communication apparatus according to the tenth aspect, refer to the technical effect of the communication method according to any one of the first aspect to the fourth aspect. Details are not described herein again.

According to an eleventh aspect, a communication apparatus is provided. The apparatus includes a processor and a memory. The memory is configured to store a computer program. When the processor executes the computer program, the communication apparatus is enabled to perform the communication method according to any one of the first aspect to the fourth aspect.

In a possible design scheme, the communication apparatus according to the eleventh aspect may further include a transceiver. The transceiver may be a transceiver circuit or an interface circuit. The transceiver may be used by the apparatus to communicate with another communication apparatus.

In this application, the communication apparatus according to the eleventh aspect may be the terminal or the network device according to the first aspect to the fourth aspect, a chip (system) or another part or component that may be disposed in the terminal or the network device, or an apparatus including the terminal or the network device.

In addition, for technical effect of the communication apparatus according to the eleventh aspect, refer to the technical effect of the communication method according to any one of the first aspect to the fourth aspect. Details are not described herein again.

According to a twelfth aspect, a communication apparatus is provided. The apparatus includes a processor. The processor is configured to: be coupled to a memory, and perform the communication method according to any one of the first aspect to the fourth aspect based on a computer program after reading the computer program in the memory.

In a possible design scheme, the communication apparatus according to the twelfth aspect may further include a transceiver. The transceiver may be a transceiver circuit or an interface circuit. The transceiver may be used by the apparatus to communicate with another communication apparatus.

In this application, the communication apparatus according to the eighth aspect may be the terminal or the network device according to the first aspect to the fourth aspect, a chip (system) or another part or component that may be disposed in the terminal or the network device, or an apparatus including the terminal or the network device.

In addition, for technical effect of the communication apparatus according to the twelfth aspect, refer to the technical effect of the communication method according to any one of the first aspect to the fourth aspect. Details are not described herein again.

According to a thirteenth aspect, a communication system is provided. The communication system includes the terminal or the network device according to the first aspect to the fourth aspect.

According to a fourteenth aspect, a computer-readable storage medium is provided. The computer-readable storage medium includes a computer program or instructions. When the computer program or the instructions are run on a computer, the computer is enabled to perform the communication method according to any one of the first aspect to the fourth aspect.

According to a fifteenth aspect, a computer program product is provided. The computer program product includes a computer program or instructions. When the computer program or the instructions are run on a computer, the computer is enabled to perform the communication method according to any one of the first aspect to the fourth aspect.

### BRIEF DESCRIPTION OF DRAWINGS

FIG. 1 is a diagram of an architecture of a 5G communication system;
FIG. 2 is a diagram of a method for a communication sensing service;
FIG. 3 is a diagram of an architecture of a communication system according to an embodiment of this application;
FIG. 4 is a schematic flowchart 1 of a communication method according to an embodiment of this application;
FIG. 5 is a schematic flowchart 2 of a communication method according to an embodiment of this application;
FIG. 6 is a schematic flowchart 3 of a communication method according to an embodiment of this application;
FIG. 7 is a schematic flowchart 4 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system:

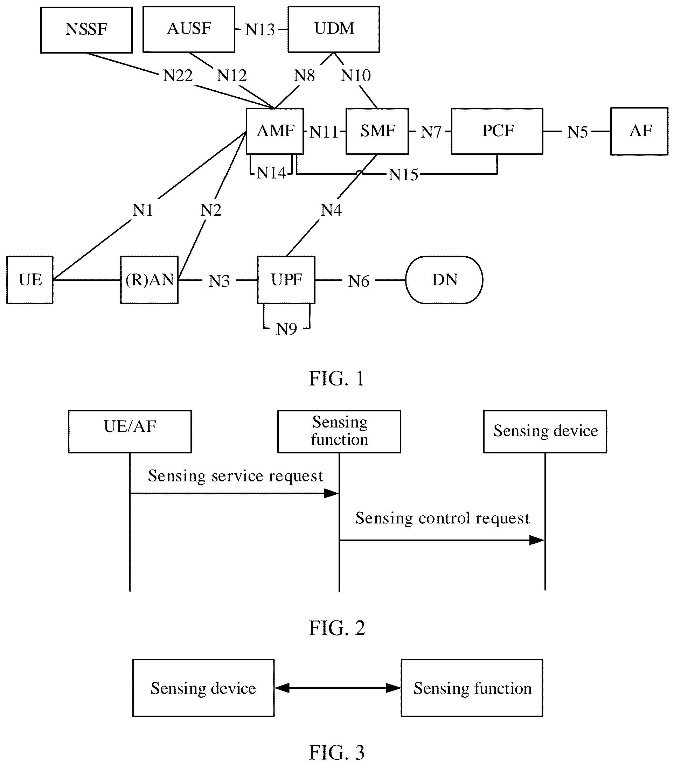

FIG. 1 is a diagram of an architecture of a 5G communication system. As shown in FIG. 1, functions of a terminal and network entities are as follows:
The terminal may be a terminal having a transceiver function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

A radio access network (radio access network, RAN) is a network including a plurality of 5G-RAN nodes, and implements a radio physical layer function, resource scheduling and radio resource management, radio access control, and a mobility management function. A 5G-RAN is connected to a UPF through a user plane interface N3, and is configured to transmit data of the terminal device. The 5G-RAN establishes a control plane signaling connection to an AMF through a control plane interface N2 to implement functions such as radio access bearer control.

The access and mobility management function (access and mobility management function, AMF) is mainly responsible for functions such as UE authentication, UE mobility management, network slice selection, and SMF selection, serves as an anchor point for N1 and N2 signaling connections and provides routes for N1/N2 SM messages for an SMF, and maintains and manages UE status information.

The session management function (session management function, SMF) is mainly responsible for all control plane functions for UE session management, including UPF selection, IP address assignment, session quality of service (quality of service, QoS) management, PCC (policy and charging control) policy obtaining (from a PCF), and the like.

The user plane function (user plane function, UPF) serves as an anchor point for PDU session connections, and is responsible for data packet filtering, data transmission/forwarding, rate control, charging information generation, and the like for the user equipment.

A unified data management (unified data management, UDM) mainly manages and controls user data, for example, manages subscription information, including obtaining subscription information from a unified data repository (unified data repository, UDR) and providing the subscription information to another network element such as the AMF, generates a 3rd generation partnership project (3rd generation partnership project, 3GPP) authentication credential for the UE, and registers and maintains a network element currently serving the UE. For example, an AMF represented by an AMF ID 1 is a current serving AMF (serving AMF) of the UE.

The unified data management is mainly configured to store user data, including subscription data invoked by the UDM, policy information invoked by the PCF, structured data used for capability exposure, and application data invoked by an NEF.

The network exposure function (network exposure function, NEF) network element is configured to connect another internal network element of a core network and an external application server of the core network for interaction, to provide network capability information for the external application server, or provide information about the external application server for the core network element.

The policy control function (policy control function, PCF) provides configuration policy information for the UE, and provides policy information for managing and controlling the UE for a control plane network element of a network, for example, the AMF or the SMF.

An application function (application function, AF) interacts with a core network element to provide some services, for example, interacts with the PCF to perform service policy control, or interacts with the NEF to obtain some network capability information or provide some application information for the network, and provide some data network access point information for the PCF to generate routing information of a corresponding data service.

An authentication server function (Authentication Server Function, AUSF) is configured to perform security authentication on the UE when the UE accesses the network.

A network slice selection function (network slice selection function, NSSF) selects a slice instance set for the UE, and determines an AMF set and allowed network slice selection assistance information (network slice selection assistance information, NSSAI) for the UE.

A data network (data network, DN) provides data services, such as an operator service, an internet access service, and a third-party service.

### 2. Sensing:

Sensing may mean that a communication entity in a wireless network determines information about an ambient environment by sending a signal and receiving a signal after an action by an object. The information about the ambient environment may include information about one or more objects in the environment. The information about the object may include a location, a speed, a size, a shape, or the like of the object. The object may change a transmission feature of the signal, for example, may change a transmission direction of the signal, change a transmission gain of the signal, change a transmission delay of the signal, or change a frequency of the signal. Therefore, the communication entity may implement sensing by obtaining a change of the transmission feature of the signal. For example, channel response information obtained through channel estimation may feed back changes of a signal after the signal passes through different transmission environments (or referred to as channels). Therefore, when the signal passes through the object, the channel response information may feed back a change of a transmission feature of the signal caused by the object.

For example, the channel response information may include a channel impulse response (channel impulse response, CIR), a channel frequency response (channel frequency response, CFR), channel state information (channel state information, CSI), or the like. This is not specifically limited in embodiments of this application.

It should be understood that "the signal after the action by the object" may include a signal after reflection by the object, a signal after refraction by the object, a signal after scattering by the object, a signal after diffraction by the object, a signal after transmission through the object, or the like. This is not specifically limited in embodiments of this application.

It may be understood that the object may be mobile or fixed, or may be active or passive. Active may mean that the object has a data processing capability. For example, the object is a base station, a mobile phone, a router, a vehicle, an uncrewed aerial vehicle, or a radio frequency identification (radio frequency identification, RFID) device. Passive may mean that the object does not have a data processing capability. For example, the object is a human body, an animal, a plant, a vehicle, or a building.

It should be understood that the "object" may also be referred to as a "scatterer", a "reflector", a "refractor", a "blocker", an "obstacle", or the like. In other words, in embodiments of this application, "object", "scatterer", "reflector", "refractor", "blocker", and "obstacle" may be interchanged for description. This is uniformly described herein, and details are not described below again.

It should be further understood that the "communication entity" may also be referred to as a "network entity", a "communication apparatus", a "communication device", a "communication node", or a "station". In other words, in embodiments of this application, "communication entity", "network entity", "communication apparatus", "communication device", "communication node", and "station" may be interchanged for description. Details are not described below again.

### 3. Integrated sensing and communication:

A wireless frequency band used by a base station or a terminal, for example, a millimeter-wave frequency band or a terahertz frequency band, has a sensing capability. A wireless communication system may perform sensing and identification on a specific area, object, or event, to resolve sensing requirements in many scenarios. The following describes examples of application scenarios of sensing requirements in the communication field.

### (1) Autonomous driving:

### Scenario 1 (smart transportation and uncrewed aerial vehicles):

Because a sensing distance of a vehicle or an uncrewed aerial vehicle is short or a non-line-of-sight (non-line-of-sight, NLOS) path of the vehicle or the uncrewed aerial vehicle cannot be sensed, the wireless communication system may generate large-scale dynamic map information based on sensing.

### Scenario 2 (smart transportation and uncrewed aerial vehicles):

In a traveling process of a vehicle or an uncrewed aerial vehicle, if a dangerous event such as sudden appearance of a person or an object occurs, the wireless communication system may identify the dangerous event based on sensing and indicate UE to perform an emergency operation.

### Scenario 3 (smart transportation and uncrewed aerial vehicles):

For autonomous driving assistance of a vehicle or an uncrewed aerial vehicle, the wireless communication system may generate a customized high-precision dynamic map based on sensing, to assist UE in autonomous driving.

### (2) Security supervision:

### Scenario 1 (smart transportation and uncrewed aerial vehicles):

In a case of traveling violation, for example, a vehicle occupying an emergency lane, or an uncrewed aerial vehicle deviating from a flight route, the wireless communication system may identify vehicle violation based on sensing and perform real-time alarming or post-event punishment.

### Scenario 2 (smart transportation, national railway perimeters, and uncrewed aerial vehicles):

If a foreign object (for example, a person, an animal, or a falling stone) intrudes into a highway or a railway track, or an uncrewed aerial vehicle intrudes into a no-fly zone (for example, an airport), the wireless communication system may identify the foreign object based on sensing and perform real-time emergency processing.

### (3) Family health:

Scenario 1: In a case of abnormal posture detection such as a person falling, the wireless communication system may identify an abnormal posture based on sensing and issue an alarm.

Scenario 2: In a case of health detection such as human respiration/heartbeat detection, the wireless communication system may identify an abnormal indicator based on sensing and issue an alarm.

(4) Meteorological monitoring: The wireless communication system may detect or predict environmental, climatic, and weather changes based on sensing.

As shown in FIG. 2, currently, a network side, for example, a sensing function (sensing function, SF), may receive sensing service requests from a plurality of sensing applications, and generate a corresponding sensing control request for each sensing service request. The network side sends a plurality of corresponding sensing control requests to a sensing device, and the sensing device may perform a sensing operation based on the received sensing control requests. The sensing application may be UE or an AF, for example, a map provider or a road regulatory authority. For specific descriptions of the sensing function (sensing function, SF), refer to related descriptions of step S401. Details are not described.

It may be understood that different sensing applications have a plurality of sensing services, for example, a road supervision service, which may be further classified into vehicle speed detection, traffic flow detection, pedestrian intrusion detection, and the like. Therefore, with large-scale application of the sensing services, the sensing device generates a corresponding sensing control request for each sensing service request, which greatly increases signaling load and causes high signaling resource overheads. Each time the sensing device receives a sensing control request, the sensing device needs to perform a sensing operation, which causes high sensing wireless resource overheads and low efficiency, and causes a waste of resources.

For the foregoing technical problem, embodiments of this application provide the following technical solutions, to reduce sensing resource overheads.

The following describes the technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5G system, for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are matchable when differences of the terms are not emphasized. Terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship.

It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

For ease of understanding embodiments of this application, a communication system shown in FIG. 3 is first used as an example to describe in detail a communication system applicable to embodiments of this application. For example, FIG. 3 is a diagram of an architecture of a communication system to which a communication method according to embodiments of this application is applicable.

As shown in FIG. 3, the communication system mainly includes a sensing function and a sensing device.

The sensing function mainly participates in receiving a sensing service request and obtaining a corresponding sensing requirement, selecting and requesting the related sensing device to perform a sensing operation and receiving corresponding sensing measurement data, and opening the sensing measurement data or a sensing result obtained based on the sensing measurement data to a sensing requester.

Optionally, a control plane and a user plane of the SF may be separated, that is, an SF control plane (SF control plane, SF-C) function and an SF user plane (SF user plane, SF-U) function are separated. The SF-C may send control signaling, for example, a sensing control request, to the sensing device through the control plane. The SF-U may receive sensing measurement data from the sensing device through the data plane, and optionally process the sensing measurement data to obtain a sensing result. The SF-C may control the SF-U. For example, the SF-C may select an appropriate SF-U, and configure one or more of an identification rule, a processing rule, or a routing rule for sensing measurement data on the SF-U. The sensing device may be the foregoing RAN or terminal. For specific descriptions, refer to related descriptions in "1. 5th generation (5th generation, 5G) mobile communication system". Details are not described again.

Optionally, the SF may be a location management function (location management function, LMF), or the SF may be a part of the LMF, or the SF and the LMF are co-located. This is not limited.

In embodiments of this application, the sensing function or the sensing device may obtain N classification results by classifying sensing requirements of M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved.

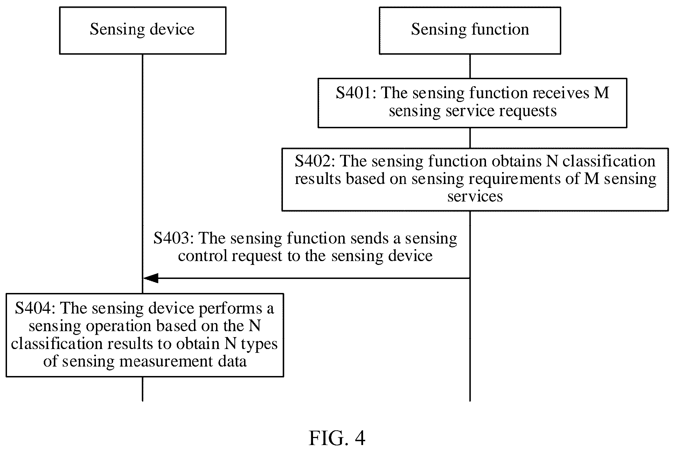

For ease of understanding, the following specifically describes the communication method provided in embodiments of this application with reference to FIG. 4 to FIG. 7.

For example, FIG. 4 is a schematic flowchart 1 of a communication method according to an embodiment of this application. The method is applicable to the foregoing communication system, and relates to interaction between a sensing function and a sensing device.

Specifically, as shown in FIG. 4, a procedure of the communication method is as follows.

S401: The sensing function receives M sensing service requests.

The sensing function may be the foregoing SF or any other possible sensing network element. This is not limited.

The M sensing service requests are in one-to-one correspondence with M sensing services, in other words, each sensing service corresponds to one sensing service request, and each of the M sensing service requests may include a sensing requirement corresponding to the sensing service. The sensing requirement of the sensing service may indicate that a device for performing sensing needs to perform a sensing operation based on the sensing requirement. In other words, each time the sensing function receives a sensing service request, the device for performing sensing needs to perform a sensing operation based on a sensing requirement of a sensing service corresponding to the sensing service request.

Optionally, the sensing service request may include a sensing service type and/or the sensing requirement of the sensing service. The sensing service type indicates a service type of the sensing service, for example, road supervision, residential intrusion detection, object distribution, driving violation detection, object trajectory tracking, object positioning, meteorological monitoring, and human health monitoring.

The sensing requirement of the sensing service may include at least one of the following parameters: a sensing precision, a resolution, a refresh rate, a delay, a detection rate, a sensing area, a miss detection rate, a false alarm rate, a confidence, a sensing moment, and the like.

The sensing precision may include a sensing distance precision, speed precision, angle precision, and the like, and indicates an error capability, in other words, an error requirement or a degree of closeness, between an actual result and a sensing measurement result obtained by the sensing device by performing sensing on a measurement target. For example, the sensing angle precision may indicate an error between a sensing measurement value and a true value of the measurement target at an angle.

The resolution may include a distance resolution, a speed resolution, an angle resolution, and the like. The distance resolution, the speed resolution, and the angle resolution respectively indicate capabilities, requirements, or differences for distinguishing two adjacent targets in terms of distance, speed, and angle, based on the sensing result obtained by the sensing device by performing sensing on the measurement target; in other words, respectively indicate capabilities, requirements, or differences for distinguishing two adjacent targets in terms of distance, speed, and angle, when the sensing device performs sensing on the measurement target.

The refresh rate may indicate a frequency of updating sensing measurement data or a sensing result, or continuity of the sensing measurement data or the sensing result. The refresh rate may also be referred to as a frame rate. For example, if the sensing measurement data is sensing point cloud information or a point cloud image, the refresh rate may be a refresh rate of point cloud information. A higher refresh rate indicates better continuity of the point cloud information or the point cloud image. For example, a refresh rate of 30 times per second may indicate that one second includes 30 pieces of point cloud information or 30 frames of point cloud images. For another example, if the sensing measurement data is further processed to obtain the sensing result, and the sensing result is sensing image information, a refresh rate of 30 times per second may indicate that one second includes 30 frames of image information.

The delay may indicate a time interval between receiving a sensing request from a sensing requester and returning a sensing result to the requester, or a time interval between triggering a sensing request by a sensing application and applying a sensing result by the sensing application, or a time interval between performing a sensing operation by the sensing device and returning a sensing result to a sensing requester.

The detection rate may indicate a probability that a target actually exists and it is determined that there is a target, in other words, indicate a ratio of successful detection events to all detection events for an actually existing target when a sensing result is obtained within a predetermined periodicity. For example, if the probability that a target actually exists and it is determined that there is a target is P1, a probability that a target actually exists but it is determined that there is no target is 1-P1. For example, the sensing device determines, through sensing measurement, that a total of 95 vehicles travel on a road a, and 100 vehicles actually travel on the road a. In this case, a detection rate is 95%.

The sensing area may indicate a geographical location or area in which the sensing device needs to perform a sensing operation, and may be represented by absolute coordinates or relative coordinates. This is not limited.

The miss detection rate may indicate a probability that a target actually exists but it is determined that there is no target, in other words, indicate a ratio of detection miss/failure events to all the detection events for the actually existing target when the sensing result is obtained within the predetermined periodicity.

The false alarm rate may indicate a probability that a target actually does not exist but it is determined that there is a target, or indicate a probability that a target actually exists but it is determined that there is no target, in other words, indicate a ratio of events, in which a detected object does not represent the target object, to all the detection events when the sensing result is obtained within the predetermined periodicity. For example, if the probability that a target actually does not exist but it is determined that there is a target is Q1, a probability that a target actually does not exist and it is determined that there is no target is 1-Q1.

The confidence may indicate a percentage of true sensing results in all sensing results obtained through detection, under a given sensing precision.

The sensing moment may indicate a determined time point at which the sensing device needs to perform sensing.

The sensing requirement of the sensing service may alternatively be represented by a sensing 5G quality of service identifier (5G QoS identifier, 5QI). The sensing 5QI is a scalar, and is used to index a sensing 5G QoS feature. In other words, sensing 5QIs may indicate sensing requirements of different sensing services. For example, a sensing 5QI #1 may indicate the following parameters: a refresh rate of 1 time per second, a detection rate of 95%, and a false alarm rate of 2%; a sensing 5QI #2 may indicate the following parameters: a refresh rate of 2 times per second, a detection rate of 90%, and a false alarm rate of 5%; a sensing 5QI #3 may indicate the following parameters: a refresh rate of 10 times per second, a detection rate of 98%, and a delay of 20 milliseconds; a sensing 5QI #4 may indicate the following parameters: a distance precision of 0.5 meters, a speed precision of 0.5 meters per second, a distance resolution of 1 meter, and a speed resolution of 1 meter per second; and a sensing 5QI #5 may indicate the following parameters: a distance precision of 0.5 meters, a speed precision of 0.5 meters per second, a distance resolution of 1 meter, a speed resolution of 1 meter per second, a refresh rate of 2 times per second, a detection rate of 90%, and a false alarm rate of 5%. It may be understood that the sensing 5QI does not include the following parameter: location or area information, or a sensing moment. A value of the sensing 5QI may be predefined in a protocol, preconfigured on the sensing function, or obtained through interaction between the sensing function and a sensing QoS management function network element (for example, a PCF). This is not limited.

The sensing requirement of the sensing service may alternatively be obtained based on the sensing service type. The sensing service type is a scalar, and is used to index the corresponding sensing requirement. For example, a sensing service type #a may indicate the following parameters: a refresh rate of 1 time per second, a detection rate of 95%, and a false alarm rate of 2%; a sensing service type #b may indicate the following parameters: a refresh rate of 2 frames per second, a detection rate of 90%, and a false alarm rate of 5%; a sensing service type #c may indicate the following parameters: a refresh rate of 10 times per second, a detection rate of 98%, and a delay of 20 milliseconds; a sensing service type #d may indicate the following parameters: a distance precision of 0.5 meters, a speed precision of 0.5 meters per second, a distance resolution of 1 meter, and a speed resolution of 1 meter per second; and a sensing service type #e may indicate the following parameters: a distance precision of 0.5 meters, a speed precision of 0.5 meters per second, a distance resolution of 1 meter, a speed resolution of 1 meter per second, a refresh rate of 2 times per second, a detection rate of 90%, and a false alarm rate of 5%. It may be understood that a correspondence between a sensing service type and a sensing requirement may be predefined in a protocol, or preconfigured on the sensing function, or obtained through interaction between the sensing function and a sensing requirement management function network element (for example, PCF) sensing device. This is not limited.

The sensing function may receive the M sensing service requests from a network function or a terminal device. The network function may include at least one of the following: an application function, an access and mobility management network element, a gateway mobile sensing center (gateway mobile sensing center, GMSC), a network exposure function (network exposure function, NEF), or a sensing client. For example, UE or the AF may send the sensing service request to the SF through the AMF.

The AF may send the sensing service request to the AMF in the following manners:

The AF may directly send the sensing service request to the AMF.

Alternatively, the AF may send the sensing service request to the AMF through the NEF and the GMSC. For example, the AF may send the sensing service request to the NEF, the NEF sends the sensing service request to the GMSC, and then the GMSC sends the sensing service request to the AMF. The NEF is configured to perform an authorization check on the AF, and the GMSC is configured to select an appropriate AMF. Optionally, the AMF may be an AMF whose sensing service range includes a sensing area corresponding to the sensing service request, or the AMF may be a serving AMF of target object UE or reference UE. The target object UE is a target object that needs to be sensed by the sensing device, and the object is a terminal device (for example, a vehicle equipped with a UE module) or includes a terminal device (for example, a pedestrian carrying a mobile phone). The reference UE is a terminal device required when the sensing device performs a sensing operation on the target object UE, and may also be referred to as auxiliary UE or sensing UE.

Alternatively, the AF may send the sensing service request to the AMF through the NEF. The NEF is configured to: perform an authorization check on the AF, and select an appropriate AMF. The AMF is a serving AMF of target object UE or reference UE. The target object UE is a terminal device on which the sensing device needs to perform sensing. The reference UE is a terminal device required when the terminal device performs a sensing operation on the target object UE.

Alternatively, the AF may send the sensing service request to the AMF through the GMSC. The GMSC is configured to: perform an authorization check on the AF, and select an appropriate AMF. Optionally, the AMF may be an AMF whose sensing service range includes a sensing area corresponding to the sensing service request, or the AMF is a serving AMF of target object UE or reference UE. The target object UE is a target object that needs to be sensed by the sensing device, and the object is a terminal device (for example, a vehicle equipped with a UE module) or includes a terminal device (for example, a pedestrian carrying a mobile phone). The reference UE is a terminal device required when the sensing device performs a sensing operation on the target object UE, and may also be referred to as auxiliary UE or sensing UE.

Alternatively, the AF may not send the sensing service request to the SF through the AMF. For example, the AF may send the sensing service request to the SF in the following manners:

The AF may directly send the sensing service request to the SF.

Alternatively, the AF may send the sensing service request to the SF through the NEF and the GMSC. For example, the AF may send the sensing service request to the NEF, the NEF sends the sensing service request to the GMSC, and then the GMSC sends the sensing service request to the SF. The NEF is configured to perform an authorization check on the AF, and the GMSC is configured to select an appropriate SF.

Alternatively, the AF may send the sensing service request to the SF through the NEF. The NEF is configured to: perform an authorization check on the AF, and select an appropriate SF.

Alternatively, the AF may send the sensing service request to the SF through the GMSC. The GMSC is configured to: perform an authorization check on the AF, and select an appropriate SF.

For example, the sensing device may receive six sensing service requests, which are separately a sensing service request #1 (sensing service #1) from a terminal #1, a sensing service request #2 (sensing service #2) from an application function #1, a sensing service request #3 (sensing service #3) from an application function #2, a sensing service request #4 (sensing service #4) from a terminal #2, a sensing service request #5 (sensing service #5) from a terminal #3, and a sensing service request #6 (sensing service #6) from an application function #3.

A sensing requirement #1 of the sensing service #1 may be a distance precision of 0.5 meters, a distance resolution of 1 meter, and a sensing area of a square A; a sensing requirement #2 of the sensing service #2 may be a distance precision of 0.5 meters, a distance resolution of 1 meter, and a sensing area of an area 1 in the square A; a sensing requirement #3 of the sensing service #3 may be a distance precision of 1.2 meters, a distance resolution of 0.6 meters, and a sensing area of 4^{th} to 6^{th} floors of a building B; a sensing requirement #4 of the sensing service #4 may be a distance precision of 1.2 meters, a distance resolution of 0.6 meters, and a sensing area of the 5^{th} floor of the building B; a sensing requirement #5 of the sensing service #5 may be a distance precision of 2 meters, a distance resolution of 1.5 meters, a sensing moment of 12:10:00 from which a 1^{st} frame starts, and a sensing area of a supermarket C; and a sensing requirement #6 of the sensing service #6 may be a distance precision of 2 meters, a distance resolution of 1.5 meters, a sensing moment of 12:10:12 from which a 1^{st} frame starts, and a sensing area of an area 2 of the supermarket C.

It may be understood that the sensing service request may alternatively be a first message, a request message, or the like. The foregoing name is merely an example, and is not limited.

S402: The sensing function obtains N classification results based on sensing requirements of the M sensing services.

In other words, the sensing function classifies or clusters the sensing requirements of the M sensing services to obtain the N classification results. The sensing function may classify or cluster same or similar sensing requirements in the sensing requirements of the M sensing services. In other words, the sensing function may classify the same or similar sensing requirements in the sensing requirements of the M sensing services into one type.

For example, the sensing function may determine one or more sensing requirements that are in the sensing requirements of the M sensing services and that meet a preset sensing requirement as a classification result. The preset sensing requirement is that types of sensing parameters are the same, and value ranges of the sensing parameters of the same type are within a preset range.

That the types of the sensing parameters are the same may be understood as that types of sensing parameters included in all sensing requirements are the same or are in one-to-one correspondence. For example, types of sensing parameters included in a sensing requirement of a sensing service #11 are a speed resolution, a refresh rate, and a detection rate, and types of sensing parameters included in a sensing requirement of a sensing service #22 are a speed resolution, a refresh rate, and a detection rate. In this case, the sensing function may consider that types of sensing parameters included in the sensing requirement of the sensing service #11 and the sensing requirement of the sensing service #22 are the same.

Alternatively, that the types of the sensing parameters are the same may be understood as that types of sensing parameters included in all sensing requirements are similar. For example, a type of a sensing parameter included in a sensing requirement of a sensing service #33 is a speed resolution, and types of sensing parameters included in a sensing requirement of a sensing service #44 are a speed resolution, a refresh rate, a delay, a detection rate, and a false alarm rate. In this case, the sensing function may consider by default that the sensing service #33 does not limit or restrict values of the refresh rate, the delay, the detection rate, and the false alarm rate. Therefore, the sensing function may also consider that types of sensing requirements included in the sensing requirement of the sensing service #33 and the sensing requirement of the sensing service #44 are the same. This is not limited in this embodiment of this application.

That the value ranges of the sensing parameters of the same type are within the preset range may be understood as that values of all sensing parameters are the same or similar, and the preset range may be understood as a value range. For example, a sensing parameter of a sensing service #11 is a speed resolution of 1 meter per second, a refresh rate of 30 times per second, and a detection rate of 90%, and a sensing parameter of a sensing service #22 is a speed resolution of 1 meter per second, a refresh rate of 60 times per second, and a detection rate of 92%. It may be understood that both the speed resolution of the sensing service #11 and the speed resolution of the sensing service #22 are 1 meter per second, and therefore the sensing function may determine that the speed resolution of the sensing service #11 and the speed resolution of the sensing service #22 meet a preset range; the refresh rate of the sensing service #11 may include the refresh rate of the sensing service #22, that is, the refresh rate of the sensing service #11 may also meet a requirement of the refresh rate of the sensing service #22, and therefore the sensing function may determine that the refresh rate of the sensing service #11 and the refresh rate of the sensing service #22 meet a preset range; and similarly, a value of the detection rate of the sensing service #11 is similar to a value of the detection rate of the sensing service #22, and therefore the sensing function may determine that the detection rate of the sensing service #11 and the detection rate of the sensing service #22 meet a preset range.

The following specifically describes a classification process.

(1) The sensing function may use a sensing range of a sensing device as a basic area, and map sensing areas of different sensing services to basic areas. (2) The sensing function may cluster same or similar sensing requirements. For example, the sensing function may determine sensing services corresponding to same or similar sensing 5QIs in the sensing requirements corresponding to the M sensing services as a same type of sensing service.

It may be understood that, if the sensing function clusters or classifies sensing 5QIs corresponding to the sensing services, and the sensing 5QI does not include a refresh rate, the sensing function needs to perform clustering or classification based on refresh rates on the basis of the foregoing clustering or classification, and cluster or classify sensing services with same or similar refresh rates into a same type. Alternatively, the sensing function may not cluster or classify the refresh rates, but use a largest refresh rate of each type of sensing service obtained through the foregoing clustering or classification as a refresh rate of the type of sensing service.

If each sensing service corresponds to a sensing moment requirement, the sensing function needs to perform clustering or classification based on sensing moments. For example, a sensing 5QI of a sensing service a is the same as a sensing 5QI of a sensing service b, a refresh rate of the sensing service a is 1 time per second, a sensing moment of the sensing service a is 10:10:00 from which a 1^{st} frame starts, a refresh rate of the sensing service b is 2 times per second, and a sensing moment of the sensing service b is 10:10:15 from which a 1^{st} frame starts. In this case, refresh rates and sensing 5QIs of the sensing service a and the sensing service b can meet a requirement of being clustered or classified into a type of sensing service, but sensing moments of the sensing service a and the sensing service b cannot meet the requirement. In this case, the sensing function further needs to perform clustering and classification on the sensing service a and the sensing service b based on the sensing moments.

If the sensing requirement of the sensing service is represented by sensing parameter information, the sensing function needs to perform clustering or classification on all sensing parameters in the sensing requirements. Alternatively, if a specific sensing parameter of the sensing service does not belong to the sensing 5QI, the sensing function further needs to perform clustering or classification in terms of the parameter. For example, if the sensing 5QI of the sensing service does not include an area, the sensing function further needs to perform clustering or classification on the sensing requirements of the sensing services based on areas.

For example, the foregoing example continues to be used, and the sensing function may classify the sensing service #1, the sensing service #2, the sensing service #3, the sensing service #4, the sensing service #5, and the sensing service #6 based on sensing areas. Sensing areas of the sensing service #1 and the sensing service #2 are both the square A, sensing areas of the sensing service #3 and the sensing service #4 are both the building B, and sensing areas of the sensing service #5 and the sensing service #6 are both the supermarket C. Therefore, the sensing service #1 and the sensing service #2 may be determined as a sensing service classification result #1, that is, a sensing area of the sensing service classification result #1 is the square A; the sensing service #3 and the sensing service #4 may be determined as a sensing service classification result #2, that is, a sensing area of the classification #2 is the 4^{th} to 6^{th} floors of the building B; and the sensing service #5 and the sensing service #6 may be determined as a sensing service classification result #3, that is, a sensing area of the classification #3 is the supermarket C.

Then, the sensing function may classify, based on distance precisions and distance resolutions, sensing requirements included in the sensing service classification result #1, the sensing service classification result #2, and the sensing service classification result #3. Distance precisions of the sensing service #1 and the sensing service #2 are both 0.5 meters. Therefore, a distance precision of the sensing service classification result #1 may be 0.5 meters. Distance resolutions of the sensing service #1 and the sensing service #2 are both 1 meter. Therefore, a distance resolution of the sensing service classification result #1 may be 1 meter. Distance precisions of the sensing service #3 and the sensing service #4 are both 1.2 meters. Therefore, a distance precision of the sensing service classification result #2 may be 1.2 meters. Distance resolutions of the sensing service #3 and the sensing service #4 are both 0.6 meters. Therefore, a distance resolution of the sensing service classification result #2 may be 0.6 meters. Distance precisions of the sensing service #5 and the sensing service #6 are both 2 meters. Therefore, a distance precision of the sensing service classification result #3 may be 2 meters. Distance resolutions of the sensing service #5 and the sensing service #6 are both 1.5 meters. Therefore, a distance resolution of the sensing service classification result #3 may be 1.5 meters.

The sensing moment of the sensing service #5 is 12:10:00 from which the 1^{st} frame starts, and the sensing moment of the sensing service #6 is 12:10:12 from which the 1^{st} frame starts. Therefore, the sensing service #5 and the sensing service #6 cannot be classified in terms of the sensing moment, in other words, the sensing service #5 and the sensing service #6 cannot be determined as a same type of sensing service. Therefore, the sensing function may determine the sensing service #5 as a sensing service classification result #3, and determine the sensing service #6 as a sensing service classification result #4.

Therefore, the sensing function classifies sensing requirements of the six sensing services to obtain the following classification results: the sensing service classification result #1, the sensing service classification result #2, the sensing service classification result #3, and the sensing service classification result #4.

It may be understood that the sensing device may alternatively classify the sensing requirements of the M sensing services in another manner. For example, the sensing device may classify the sensing requirements of the M sensing services by using a classification network model. This is not limited.

The sensing function classifies the sensing requirements of the M sensing services in the foregoing manner, and may obtain the N classification results. An i^{th} classification result in the N classification results may indicate a sensing requirement of an i^{th} type of sensing service, the sensing requirement of the i^{th} type of sensing service is used by the device for performing sensing to perform a sensing operation based on the sensing requirement of the i^{th} type of sensing service, i is any integer from 1 to N, the i^{th} type of sensing service includes at least one of the M sensing services, and M is greater than N.

In other words, the i^{th} type of sensing service is a set of sensing services of one type obtained by the sensing function by classifying the sensing requirements of the M sensing services. Sensing requirements of the sensing services in the set of sensing services are the same or similar, and a set of sensing services of each type includes at least one of the M sensing services. The sensing requirement of the i^{th} type of sensing service is used to meet a sensing requirement of any sensing service in the i^{th} type of sensing service, in other words, the sensing requirement of the i^{th} type of sensing service includes the sensing requirement of any sensing service in the type of sensing service. Therefore, the sensing device performs a sensing operation based on the sensing requirement of the i^{th} type of sensing service, to obtain sensing measurement data required by each sensing service in the i^{th} type of sensing service. The i^{th} classification result further indicates the i^{th} type of sensing service, in other words, the i^{th} classification result may further indicate which sensing services in the M sensing services belong to the i^{th} type of sensing service.

The i^{th} classification result may further include an i^{th} classification identifier. The i^{th} classification identifier is used to identify the i^{th} type of sensing service and/or the sensing requirement of the i^{th} type of sensing service. In other words, the i^{th} type of sensing service and the sensing requirement of the i^{th} type of sensing service may be identified by the i^{th} classification identifier.

S403: The sensing function sends a sensing control request to the sensing device. The sensing device receives the sensing control request from the sensing function.

A quantity of sensing control requests may be A, 1 ≤ A ≤ N, and A is an integer. If one sensing control request is for one type of sensing service, N sensing control requests exist. Alternatively, if one sensing control request is for all types of sensing services, one sensing control request exists. The quantity of sensing control requests is not limited in this embodiment of this application.

If the sensing function sends one sensing control request to the sensing device, the sensing control request may include the N classification results, and the sensing control request is used by the sensing device to obtain N types of sensing measurement data corresponding to the N classification results.

If the sensing function sends N sensing control requests to the sensing device, an i^{th} sensing control request in the N sensing control requests may include the i^{th} classification result in the N classification results, and the i^{th} sensing control request is used by the sensing device to obtain N types of sensing measurement data corresponding to the i^{th} classification result.

If the sensing function sends a sensing control requests to the sensing device, where 1 ≤ a ≤ A or A ≤ a ≤ N, and a is an integer, an x^{th} sensing control request in the a sensing control requests may include at least one of the N classification results, and the a sensing control requests may indicate the N classification results. For example, the sensing function classifies sensing services, to obtain three classification results, which are separately a classification #a, a classification #b, and a classification #c. The sensing function may send two sensing control requests to the sensing device, where the two sensing control requests are separately a sensing control request #a and a sensing control request #b. The sensing control request #a may include the classification #a and the classification #b, and the sensing control request #b may include the classification #c.

The sensing control request may include the N sensing classification results, and the sensing control request is used by the sensing device to obtain the N types of sensing measurement data corresponding to the N classification results. The N types of sensing measurement data are in one-to-one correspondence with the N classification results.

An example in which the sensing device sends N sensing control requests to the sensing function is used below for specific description.

For example, the foregoing example continues to be used, and the sensing function may obtain a corresponding sensing control request #1, sensing control request #2, sensing control request #3, and sensing control request #4 based on the four classification results: the sensing service classification result #1, the sensing service classification result #2, the sensing service classification result #3, and the sensing service classification result #4. The sensing control request #1 includes the sensing service classification result #1, and the sensing service classification result #1 may be used by the device for performing sensing to perform a sensing operation based on a sensing requirement of the sensing service classification result #1. The sensing control request #2 includes the classification #2, and the sensing service classification result #2 may be used by the device for performing sensing to perform a sensing operation based on a sensing requirement of the sensing service classification result #2. The sensing control request #3 includes the classification #3, and the sensing service classification result #3 may be used by the device for performing sensing to perform a sensing operation based on a sensing requirement of the sensing service classification result #3. The sensing control request #4 includes the classification #4, and the sensing service classification result #4 may be used by the device for performing sensing to perform a sensing operation based on a sensing requirement of the sensing service classification result #4.

It may be understood that the sensing control request may alternatively be a second message, a control message, or the like. The foregoing name is merely an example, and is not limited.

S404: The sensing device performs a sensing operation based on the N classification results to obtain the N types of sensing measurement data.

The N types of sensing measurement data are in one-to-one correspondence with the N classification results, and an i^{th} type of sensing measurement data in the N types of sensing measurement data may be sensing measurement data that is of the i^{th} type of sensing service and that is obtained by the sensing device by performing sensing based on the i^{th} classification result.

For example, the foregoing example continues to be used, and the sensing device may perform a sensing operation based on the sensing control request #1 to obtain sensing measurement data #1, the sensing device may perform a sensing operation based on the sensing control request #2 to obtain sensing measurement data #2, the sensing device may perform a sensing operation based on the sensing control request #3 to obtain sensing measurement data #4, and the sensing device may perform a sensing operation based on the sensing control request #4 to obtain sensing measurement data #4.

An example in which the sensing device performs the sensing operation based on the sensing control request #1 to obtain the sensing measurement data #1 is used below for specific description.

It is assumed that the sensing service #1 is to detect foot traffic of the square A, and the sensing service #2 is to sense a quantity of children in the area 1 of the square A. It can be learned from the foregoing descriptions that the sensing requirement of the sensing service classification result #1 is a distance precision of 0.5 meters, a distance resolution of 1 meter, and a sensing area of the square A. In this case, the sensing device may detect a quantity of people in the area of the square A based on the sensing requirement to obtain the sensing measurement data #1. The sensing measurement data #1 includes information about the foot traffic of the square A and information about the quantity of children in the area 1 of the square A.

It may be understood that the sensing device may sense a moving object. For example, the sensing device may track a trajectory of a traveling vehicle. Alternatively, the sensing device may sense an object in a stationary area. For example, the sensing device may detect a quantity of street lamps. This is not limited.

In conclusion, the sensing function may obtain the N classification results by classifying the sensing requirements of the M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved.

With reference to the foregoing embodiment, optionally, the method may further include:
After receiving the sensing control request from the sensing function, the sensing device may send, to the sensing function, a sensing control response returned for the sensing control request. The sensing function may receive the sensing control response returned by the sensing device for the sensing control request.

A quantity of sensing control responses is the same as the quantity of received sensing control requests. In other words, each time the sensing device receives a sensing control request, the sensing device returns, to the sensing function, a sensing control response corresponding to the sensing control request. If one sensing control response is for one type of sensing service, N sensing control responses exist. Alternatively, if one sensing control response is for all types of sensing services, one sensing control response exists. This is not limited in this embodiment of this application.

If the sensing function sends one sensing control request to the sensing device, the sensing device may send, to the sensing function, one sensing control response returned for the sensing control request. Optionally, if the sensing control request does not include a classification identifier, the sensing control response may include N classification identifiers. An i^{th} classification identifier in the N classification identifiers is used to identify the i^{th} type of sensing service and/or the sensing requirement of the i^{th} type of sensing service, and the sensing control response may indicate that the sensing device has successfully received the sensing control request.

If the sensing function sends N sensing control requests to the sensing device, the sensing device may send, to the sensing function, N sensing control responses returned for the sensing control requests. An i^{th} sensing control response in the N sensing control responses may include an i^{th} classification identifier, and the i^{th} classification identifier is used to identify the i^{th} type of sensing service and/or the sensing requirement of the i^{th} type of sensing service. The i^{th} sensing control response may indicate that the sensing device has successfully received an i^{th} sensing control request.

Optionally, the method may further include: The sensing device sends the N types of sensing measurement data to the sensing function. The sensing function receives the N types of sensing measurement data from the sensing device.

The sensing device may send the N types of sensing measurement data to the sensing function in the following two manners, which are specifically described below:
Manner 1: N data transmission channels are established between the sensing function and the sensing device, and the sensing device sends the i^{th} type of sensing measurement data in the N types of sensing measurement data to the sensing function through an i^{th} data transmission channel in the N data transmission channels. Optionally, the i^{th} data transmission channel may be identified by the i^{th} classification identifier, or may be identified by a dedicated data transmission channel identifier. The dedicated data transmission channel identifier may be allocated by the sensing function and/or the sensing device.

For example, the sensing device may establish the N data transmission channels that are in one-to-one correspondence with the N classification results based on the N classification results in the received sensing control request, that is, the i^{th} classification result in the N classification results corresponds to the i^{th} data transmission channel in the N data transmission channels, in other words, the sensing device may establish one data transmission channel for each type of sensing service. Therefore, the sensing device may send the i^{th} type of sensing measurement data to the sensing function through the i^{th} data transmission channel.

The sensing device may alternatively send the N types of sensing measurement data to the sensing function by using N existing data transmission channels. In this case, the sensing device may use the N classification identifiers to identify the N data transmission channels. For example, the sensing device may send the i^{th} type of sensing measurement data to the sensing function through an i^{th} data transmission channel. Optionally, the i^{th} data transmission channel may be identified by the i^{th} classification identifier, or may be identified by a dedicated data transmission channel identifier. The dedicated data transmission channel identifier may be allocated by the sensing function and/or the sensing device. This is not limited.

Manner 2: One data transmission channel is established between the sensing function and the sensing device, and the sensing device sends the N types of sensing measurement data to the sensing function through the data transmission channel. The i^{th} type of sensing measurement data in the N types of sensing measurement data may be identified by the i^{th} classification.

For example, the sensing device may establish one data transmission channel based on the received N classification results, and send the N types of sensing measurement data to the sensing function through the data transmission channel. Alternatively, the sensing device may send the N types of sensing measurement data to the sensing function through one existing data transmission channel. In this case, the sensing device may use the N classification identifiers to identify the N types of sensing measurement data. For example, the sensing device may mark the i^{th} classification identifier on a data packet of the i^{th} type of sensing measurement data, in other words, the i^{th} classification identifier is carried in the data packet of the i^{th} type of sensing measurement data.

Optionally, the method may further include: The sensing function may process the N types of sensing measurement data to obtain respective sensing measurement data of the M sensing services.

For example, first, the sensing function may obtain the i^{th} type of sensing service corresponding to the i^{th} type of sensing measurement data based on the i^{th} classification result and the i^{th} type of sensing measurement data; and second, the sensing function may obtain sensing measurement data corresponding to each sensing service in the i^{th} type of sensing service based on a sensing requirement corresponding to each sensing service in the i^{th} type of sensing service and the i^{th} type of sensing measurement data. The sensing measurement data of each sensing service in the i^{th} type of sensing service is a part of the i^{th} type of sensing measurement data, in other words, the i^{th} type of sensing measurement data includes the sensing measurement data of each sensing service in the i^{th} type of sensing service.

Alternatively, optionally, the sensing function may obtain a sensing result corresponding to each sensing service in the i^{th} type of sensing service based on a sensing requirement corresponding to each sensing service in the i^{th} type of sensing service and the i^{th} type of sensing measurement data. The sensing result is a sensing result that is of each sensing service in the i^{th} type of sensing service and that is obtained after the sensing function processes the i^{th} type of sensing measurement data. For example, the sensing function may process the i^{th} type of sensing measurement data to obtain an i^{th} type of sensing result, and then obtain the sensing result of each sensing service in the i^{th} type of sensing service from the i^{th} type of sensing result. For another example, the sensing function obtains sensing measurement data of each sensing service in the i^{th} type of sensing service based on the i^{th} type of sensing measurement data, and then processes the sensing measurement data of each sensing service to obtain an i^{th} sensing result. Optionally, the sensing result may alternatively be the same as the sensing measurement data. This is not limited.

If the sensing function receives the N types of sensing measurement data through the N data transmission channels in the manner 1, the sensing function may determine a classification corresponding to received sensing measurement data based on a data transmission channel corresponding to the sensing measurement data. For example, if the sensing function receives sensing measurement data through the i^{th} data transmission channel, the sensing function may determine that the sensing measurement data is the i^{th} type of sensing measurement data in the N types of sensing measurement data.

The i^{th} type of sensing measurement data is sensing measurement data that is of the i^{th} type of sensing service and that is obtained by the sensing device by performing sensing based on the i^{th} classification result. Therefore, the sensing function may determine that the i^{th} type of sensing measurement data corresponds to the i^{th} type of sensing service, and the i^{th} type of sensing service corresponds to at least one of the M sensing services.

For another example, the sensing function may alternatively obtain sensing measurement data corresponding to each sensing service in the i^{th} type of sensing service based on a sensing requirement corresponding to each sensing service in the i^{th} type of sensing service and the i^{th} type of sensing measurement data.

Alternatively, optionally, the sensing function may obtain a sensing result corresponding to each sensing service in the i^{th} type of sensing service based on a sensing requirement corresponding to each sensing service in the i^{th} type of sensing service and the i^{th} type of sensing measurement data.

For example, the foregoing example continues to be used, and the sensing function may receive the sensing measurement data #1 through a data transmission channel #1, receive the sensing measurement data #2 through a data transmission channel #2, receive the sensing measurement data #3 through a data transmission channel #3, and receive the sensing measurement data #4 through a data transmission channel #4.

An example in which the sensing device identifies and processes the received sensing measurement data #1 to obtain sensing measurement data respectively corresponding to the sensing service #1 and the sensing service #2 is used below for specific description.
(1) If the sensing function receives sensing measurement data through the data transmission channel #1, the sensing function may determine that the sensing measurement data is the sensing measurement data #1.
(2) The sensing function may determine, based on a correspondence between the sensing measurement data #1 and the sensing control request #1 and a correspondence between the sensing control request #1 and the sensing service classification result #1, that the sensing measurement data #1 is sensing measurement data that is of the sensing service classification result #1 and that is obtained by performing sensing based on the sensing control request #1.
(3) Based on a correspondence between the sensing service classification result #1 and the sensing service #1 and the sensing service #2, the sensing function may send, to the terminal #1, the information about the foot traffic of the square A that is obtained from the sensing measurement data #1, and send, to the application function #1, the information about the quantity of children in the area 1 of the square A that is obtained from the sensing measurement data #1.

It may be understood that, identification and processing processes performed by the sensing device on the sensing measurement data #2, the sensing measurement data #3, and the sensing measurement data #4 are similar to identification and processing processes performed by the sensing device on the sensing measurement data #1. Reference may be made for understanding, and details are not described again.

If the sensing function receives the N types of sensing measurement data through the data transmission channel in the manner 2, the sensing function may determine a classification result corresponding to received sensing measurement data based on a classification identifier carried in a data packet of the sensing measurement data. For example, if the data packet of the sensing measurement data received by the sensing function includes the i^{th} classification identifier, the sensing function may determine that the sensing measurement data is the i^{th} type of sensing measurement data in the N types of sensing measurement data.

The i^{th} type of sensing measurement data is sensing measurement data that is of the i^{th} type of sensing service and that is obtained by the sensing device by performing sensing based on the i^{th} classification result. Therefore, the sensing function may determine that the i^{th} type of sensing measurement data corresponds to the i^{th} type of sensing service, and the i^{th} type of sensing service corresponds to at least one of the M sensing services.

For example, the foregoing example continues to be used, and the sensing function may receive the sensing measurement data #1, sensing measurement data #2, sensing measurement data #3, and sensing measurement data #4 through a data transmission channel. A data packet of the sensing measurement data #1 carries a classification identifier #1, a data packet of the sensing measurement data #2 carries a classification identifier #2, a data packet of the sensing measurement data #3 carries a classification identifier #3, and a data packet of the sensing measurement data #4 carries a classification identifier #4.

An example in which the sensing device identifies and processes the received sensing measurement data #1 to obtain sensing measurement data respectively corresponding to the sensing service #1 and the sensing service #2 is used below for specific description.
(1) If the sensing function receives sensing measurement data through the general-purpose data transmission channel, where a data packet of the sensing measurement data carries the classification identifier #1, the sensing function may determine that the sensing measurement data is the sensing measurement data #1.
(2) The sensing function may determine, based on a correspondence between the sensing measurement data #1 and the sensing control request #1 and a correspondence between the sensing control request #1 and the sensing service classification result #1, that the sensing measurement data #1 is sensing measurement data that is of the sensing service classification result #1 and that is obtained by performing sensing based on the sensing control request #1.

Based on a correspondence between the sensing service classification result #1 and the sensing service #1 and the sensing service #2, the sensing function may send, to the terminal #1, the information about the foot traffic of the square A that is obtained from the sensing measurement data #1, and send, to the application function #1, the information about the quantity of children in the area 1 of the square A that is obtained from the sensing measurement data #1.

It may be understood that, identification and processing processes performed by the sensing device on the sensing measurement data #2, the sensing measurement data #3, and the sensing measurement data #4 are similar to identification and processing processes performed by the sensing device on the sensing measurement data #1. Reference may be made for understanding, and details are not described again.

Optionally, the method may further include: The sensing device may send respective sensing measurement data or sensing results of the M sensing services to a corresponding network function or terminal device.

For example, the SF may send, to the UE or the AF through the AMF, the sensing measurement data respectively corresponding to the M sensing services.

The SF sends the sensing measurement data respectively corresponding to the M sensing services to the AMF in the following manners:
The SF may directly send the sensing measurement data respectively corresponding to the M sensing services to the AMF.

Alternatively, the SF may send the sensing measurement data respectively corresponding to the M sensing services to the AMF through the GMSC and the NEF. For example, the SF may send the sensing measurement data respectively corresponding to the M sensing services to the GMSC, the GMSC sends the sensing measurement data respectively corresponding to the M sensing services to the NEF, and then the NEF sends the sensing measurement data respectively corresponding to the M sensing services to the AMF.

Alternatively, the SF may send the sensing measurement data respectively corresponding to the M sensing services to the AMF through the NEF.

Alternatively, the SF may send the sensing measurement data respectively corresponding to the M sensing services to the AMF through the GMSC.

Alternatively, the SF may not send the sensing measurement data respectively corresponding to the M sensing services to the AF through the AMF. For example, the SF may send the sensing measurement data respectively corresponding to the M sensing services to the AF in the following manners:

The SF may directly send the sensing service request to the AMF.

Alternatively, the SF may send the sensing service request to the AF through the NEF and the GMSC. For example, the SF may send the sensing service request to the GMSC, the GMSC sends the sensing service request to the NEF, and then the NEF sends the sensing service request to the SF.

Alternatively, the SF may send the sensing service request to the AF through the NEF.

Alternatively, the SF may send the sensing service request to the AF through the GMSC.

It may be understood that the sensing measurement data in the foregoing example may alternatively be a sensing result. This is not limited in this embodiment of this application.

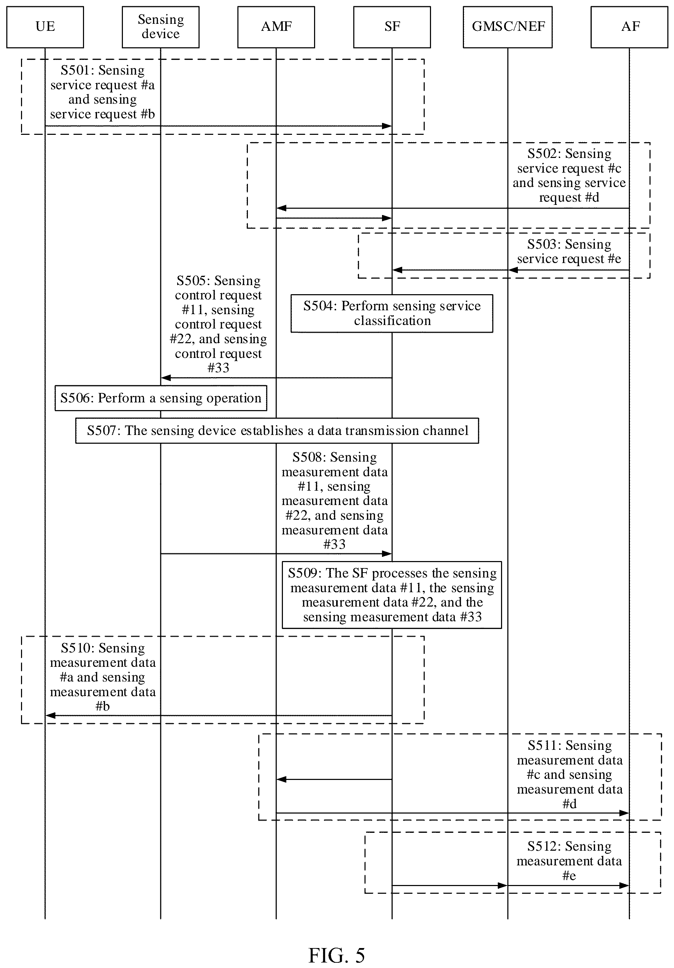

With reference to the method embodiment, the foregoing describes an overall procedure of the communication method provided in embodiments of this application. For ease of understanding, as shown in FIG. 5, the following describes the foregoing method by using a specific scenario.

Scenario 1: An SF classifies sensing requirements of M sensing services.

S501: A terminal sends a sensing service request #a and a sensing service request #b to the SF.

The sensing service request #a may include a service type #a and/or a sensing requirement #a, and the sensing service request #b may include a service type #b and/or a sensing requirement #b. For specific implementations of the sensing service request #a and the sensing service request #b, refer to related descriptions in step S401. Details are not described again. For a specific implementation in which the terminal sends the sensing service request #a and the sensing service request #b to the SF, refer to related descriptions in step S401. Details are not described again.

S502: An AF sends a sensing service request #c and a sensing service request #d to the SF through an AMF.

The sensing service request #c may include a service type #c and/or a sensing requirement #d, and the sensing service request #d may include a service type #c and/or a sensing requirement #d. For specific implementations of the sensing service request #c and the sensing service request #d, refer to related descriptions in step S401. Details are not described again. For a specific implementation in which the terminal sends the sensing service request #c and the sensing service request #d to the SF through the AMF, refer to related descriptions in step S401. Details are not described again.

S503: The AF sends a sensing service request #e to the SF through an NEF and/or a GMSC.

The sensing service request #e may include a service type #e and/or a sensing requirement #e. For a specific implementation of the sensing service request #e, refer to related descriptions in step S401. Details are not described again. For a specific implementation in which the AF sends the sensing service request #e through the NEF and/or the GMSC, refer to related descriptions in step S401. Details are not described again.

S504: The SF performs sensing service classification.

The SF classifies the received sensing service request #a, sensing service request #b, sensing service request #c, sensing service request #d, and sensing service request #e. The sensing service request #a and the sensing service request #b are determined as a sensing service classification result #11, the sensing service request #c and the sensing service request #d are determined as a sensing service classification result #22, and the sensing service request #e is determined as a sensing service classification result #33. For a specific implementation process in which the SF classifies sensing service requests, refer to related descriptions in step S402. Details are not described again.

It may be understood that the sensing service classification result #11 may indicate sensing requirements of the sensing service request #a and the sensing service request #b, the sensing service classification result #22 may indicate sensing requirements of the sensing service request #c and the sensing service request #d, and the sensing service classification result #33 may indicate a sensing requirement of the sensing service request #e.

S505: The SF sends a sensing control request #11, a sensing control request #22, and a sensing control request #33 to a sensing device.

The sensing control request #11 may include the sensing service classification result #11, the sensing control request #22 includes the sensing service classification result #22, and the sensing control request #33 includes the sensing service classification result #33. For a specific implementation process, refer to related descriptions in step S403. Details are not described again.

S506: The sensing device performs a sensing operation.

The sensing device performs the sensing operation based on the sensing control request #11, the sensing control request #22, and the sensing control request #33.

Specifically, the sensing device performs a sensing operation based on a sensing requirement of the sensing control request #11 to obtain sensing measurement data #11, the sensing device performs a sensing operation based on a sensing requirement of the sensing control request #22 to obtain sensing measurement data #22, and the sensing device performs a sensing operation based on a sensing requirement of the control request #33 to obtain sensing measurement data #33. For a specific implementation process, refer to related descriptions in step S404. Details are not described again.

S507: The sensing device establishes a data transmission channel.

The sensing device may establish a corresponding data transmission channel for each sensing control request. For example, the sensing device may establish a data transmission channel #11 based on the sensing control request #11, the sensing device may establish a data transmission channel #22 based on the sensing control request #22, and the sensing device may establish a data transmission channel #33 based on the sensing control request #33.

It may be understood that, if in step S505, the sensing control request #11 further includes a classification identifier #11, the sensing control request #22 further includes a classification identifier #22, and the sensing control request #33 further includes a classification identifier #33, the data transmission channel #11 may be identified by the classification identifier #11, the data transmission channel #22 may be identified by the classification identifier #22, and the data transmission channel #33 may be identified by the classification identifier #33. Alternatively, the data transmission channel #11, the data transmission channel #22, and the data transmission channel #33 may be identified by dedicated data transmission channel identifiers, and the dedicated data transmission channel identifiers may be allocated by the sensing function and/or the sensing device. This is not limited.

Alternatively, the sensing device may establish one general-purpose data transmission channel based on the sensing control request #11, the sensing control request #22, and the sensing control request #33. In this case, a data packet of the sensing measurement data #11 carries a classification identifier #11, a data packet of the sensing measurement data #22 carries a classification identifier #22, and a data packet of the sensing measurement data #33 carries a classification identifier #33.

It may be understood that, if the general-purpose data transmission channel is established, the channel may be established before steps S501 to S503. For example, the channel may be established in advance between the sensing device and the sensing function before the sensing function receives the sensing service request. For example, after the sensing device is enabled, if the sensing device supports a sensing capability, the sensing device may actively establish the general-purpose data transmission channel between the sensing device and the sensing function.

If a classification (for example, the classification #11) already exists and the data transmission channel #11 is established before steps S501 to S503, if the SF receives 10 sensing service requests and classifies three of the 10 sensing service requests into the classification result #11, there is no need to newly establish a data transmission channel, and the existing data transmission channel #11 is reused.

A sequence of step S506 and step S507 may be selected based on an actual scenario. This is not limited.

S508: The sensing device sends the sensing measurement data #11, the sensing measurement data #22, and the sensing measurement data #33 to the SF.

The sensing device may send the sensing measurement data #11 to the sensing function through the data transmission channel #11, send the sensing measurement data #22 to the sensing function through the data transmission channel #22, and send the sensing measurement data #33 to the sensing function through the data transmission channel #33.

Alternatively, the sensing device may send the sensing measurement data #11, the sensing measurement data #22, and the sensing measurement data #33 to the SF through the general-purpose data transmission channel.

S509: The SF processes the sensing measurement data #11, the sensing measurement data #22, and the sensing measurement data #33.

If the SF receives sensing measurement data through the data transmission channel #11, the sensing measurement data is the sensing measurement data #11. The SF may obtain, based on a correspondence between the sensing measurement data #11, the sensing control request #11, the sensing service classification result #11, the sensing service request #a, and the sensing service request #b, measurement data #a corresponding to the sensing service request #a and measurement data #b corresponding to the sensing service request #b in a measurement result #11.

Similarly, if the SF receives sensing measurement data through the data transmission channel #22, the sensing measurement data is the sensing measurement data #22. The SF may obtain, based on a correspondence between the sensing measurement data #22, the sensing control request #22, the sensing service classification result #22, the sensing service request #c, and the sensing service request #d, measurement data #c corresponding to the sensing service request #c and measurement data #d corresponding to the sensing service request #d in a measurement result #22.

Similarly, if the SF receives sensing measurement data through the data transmission channel #33, the sensing measurement data is the sensing measurement data #33. The SF may determine, based on a correspondence between the sensing measurement data #33, the sensing control request #33, the sensing service classification result #33, and the sensing service request #e, a measurement result #33 as measurement data #c corresponding to the sensing service request #c.

Alternatively, if the sensing device receives the sensing measurement data #11 through the general-purpose data transmission channel, the SF may obtain, based on a correspondence between the classification identifier #11, the sensing measurement data #11, the sensing control request #11, the sensing service classification result #11, the sensing service request #a, and the sensing service request #b, measurement data #a corresponding to the sensing service request #a and measurement data #b corresponding to the sensing service request #b in a measurement result #11.

Similarly, if the sensing device receives the sensing measurement data #22 through the general-purpose data transmission channel, the SF may obtain, based on a correspondence between the classification identifier #22, the sensing measurement data #22, the sensing control request #22, the sensing service classification result #22, the sensing service request #c, and the sensing service request #d, measurement data #c corresponding to the sensing service request #c and sensing measurement data #d corresponding to the sensing service request #d in a measurement result #22.

Similarly, if the sensing device receives the sensing measurement data #33 through the general-purpose data transmission channel, the SF may determine, based on a correspondence between the classification identifier #33, the sensing measurement data #33, the sensing control request #33, the sensing service classification result #33, and the sensing service request #e, a measurement result #33 as measurement data #c corresponding to the sensing service request #c.

S510: The SF sends the sensing measurement data #a and the sensing measurement data #b to the terminal.

A specific implementation process of step S509 is similar to that of step S501. Reference may be made for understanding, and details are not described again.

S511: The SF sends the sensing measurement data #c and the sensing measurement data #d to the AF through the AMF.

A specific implementation process of step S510 is similar to that of step S502. Reference may be made for understanding, and details are not described again.

S512: The SF sends the sensing measurement data #e to the AF through the NEF and/or the GMSC.

A specific implementation process of step S511 is similar to that of step S503. Reference may be made for understanding, and details are not described again.

It may be understood that, in step S509, the SF may alternatively obtain a sensing result #11 based on the measurement data #11, obtain a sensing result #22 based on the measurement data #22, and obtain a sensing result #33 based on the measurement data #33. In this case, in steps S510 to S512, the sensing measurement data #a may be replaced with a sensing result #a, the sensing measurement data #b may be replaced with a sensing result #b, the sensing measurement data #c may be replaced with a sensing result #c, the sensing measurement data #d may be replaced with a sensing result #d, and the sensing measurement data #e may be replaced with a sensing result #e. This scenario includes at least one of steps S501 to S503. This is not limited.

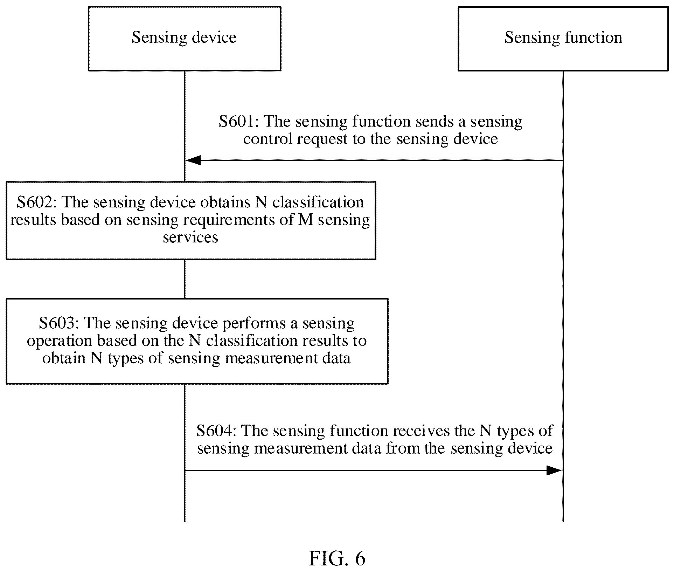

For example, FIG. 6 is a schematic flowchart 3 of a communication method according to an embodiment of this application. The method is applicable to the foregoing communication system, and relates to interaction between a sensing function and a sensing device.

Specifically, as shown in FIG. 6, a procedure of the communication method is as follows.

S601: The sensing function sends a sensing control request to the sensing device. The sensing device receives the sensing control request from the sensing function.

The sensing control request includes sensing requirements of M sensing services. A quantity of sensing control requests may be B, 1 ≤ B ≤ M, and B is an integer. If one sensing control request is for one sensing service, M sensing control requests exist. Alternatively, if one sensing control request is for all sensing services, one sensing control request exists. The quantity of sensing control requests is not limited in this embodiment of this application.

If the sensing function sends one sensing control request to the sensing device, the sensing control request may include the sensing requirements of the M sensing services.

If the sensing function sends M sensing control requests to the sensing device, an i^{th} sensing control request in the M sensing control requests may include a sensing requirement of an i^{th} sensing service in the M sensing services.

If the sensing function sends b sensing control requests to the sensing device, where 1 ≤ b ≤ B or B ≤ b ≤ M, and a is an integer, an x^{th} sensing control request in the b sensing control requests may include a sensing requirement of at least one of the M sensing services, and the b sensing control requests may indicate the sensing requirements of the M sensing services.

The M sensing control requests are in one-to-one correspondence with the M sensing services, and an a^{th} sensing control request in the M sensing control requests corresponds to a sensing service request of an a^{th} sensing service in the M sensing services, and is denoted as an a^{th} sensing service request. In other words, the a^{th} sensing control request in the M sensing control requests is in one-to-one correspondence with the a^{th} sensing service and the a^{th} sensing service request.

A sensing requirement of each of the M sensing services may be represented by sensing parameter information. For specific descriptions, refer to related descriptions in step S401. Details are not described again.

For example, the sensing device sends six sensing control requests to the sensing device, and the six sensing control requests are separately a sensing control request #1a (sensing service #1a), a sensing control request #2a (sensing service #2a), a sensing control request #3a (sensing service #3a), a sensing control request #4a (sensing service #4a), a sensing control request #5a (sensing service #5a), and a sensing control request #6a (sensing service #6a).

A sensing requirement #1a of the sensing service #1a may be a distance precision of 0.5 meters, a distance resolution of 1 meter, and a sensing area of a square A; a sensing requirement #2a of the sensing service #2a may be a distance precision of 0.5 meters, a distance resolution of 1 meter, and a sensing area of an area 1 in the square A; a sensing requirement #3a of the sensing service #3a may be a distance precision of 1.2 meters, a distance resolution of 0.6 meters, and a sensing area of 4^{th} to 6^{th} floors of a building B; a sensing requirement #4a of the sensing service #4a may be a distance precision of 1.2 meters, a distance resolution of 0.6 meters, and a sensing area of the 5^{th} floor of the building B; a sensing requirement #5a of the sensing service #5a may be a distance precision of 2 meters, a distance resolution of 1.5 meters, a sensing moment of 12:10:00 from which a 1^{st} frame starts, and a sensing area of a supermarket C; and a sensing requirement #6a of the sensing service #6a may be a distance precision of 2 meters, a distance resolution of 1.5 meters, a sensing moment of 12:10:12 from which a 1^{st} frame starts, and a sensing area of an area 2 of the supermarket C.

S602: The sensing device obtains N classification results based on the sensing requirements of the M sensing services.

In other words, the sensing device classifies or clusters the sensing requirements of the M sensing services to obtain the N classification results. The sensing device may classify or cluster same or similar sensing requirements in the sensing requirements of the M sensing services. In other words, the sensing device may classify the same or similar sensing requirements in the sensing requirements of the M sensing services into one type.

For example, the sensing device may determine one or more sensing requirements that are in the sensing requirements of the M sensing services and that meet a preset sensing requirement as a classification result. The preset sensing requirement is that types of sensing parameters are the same, and value ranges of the sensing parameters of the same type are within a preset range.

An example is provided: (1) The sensing device may use a sensing range of a sensing device as a basic area, and map sensing areas of different sensing services to basic areas. (2) The sensing device may cluster same or similar sensing requirements. For example, the sensing device may determine sensing services corresponding to same or similar sensing 5QIs in the sensing requirements corresponding to the M sensing services as a same type of sensing service.

It may be understood that, if the sensing device clusters or classifies sensing 5QIs corresponding to the sensing services, and the sensing 5QI does not include a refresh rate, the sensing device needs to perform clustering or classification based on refresh rates on the basis of the foregoing clustering or classification, and cluster or classify sensing services with same or similar refresh rates into a same type. Alternatively, the sensing device may not cluster or classify the refresh rates, but use a largest refresh rate of each type of sensing service obtained through the foregoing clustering or classification as a refresh rate of the type of sensing service.

If each sensing service corresponds to a sensing moment requirement, the sensing device further needs to perform clustering or classification based on sensing moments. For example, a sensing 5QI of a sensing service a is the same as a sensing 5QI of a sensing service b, a refresh rate of the sensing service a is 1 time per second, a sensing moment of the sensing service a is 10:10:00 from which a 1^{st} frame starts, a refresh rate of the sensing service b is 2 times per second, and a sensing moment of the sensing service b is 10: 10: 15 from which a 1^{st} frame starts. In this case, refresh rates and sensing 5QIs of the sensing service a and the sensing service b can meet a requirement of being clustered or classified into a type of sensing service, but sensing moments of the sensing service a and the sensing service b cannot meet the requirement. In this case, the sensing device further needs to perform clustering and classification on the sensing service a and the sensing service b based on the sensing moments.

If the sensing requirement of the sensing service is represented by the sensing parameter information, the sensing device needs to perform clustering or classification on all sensing parameters in the sensing requirements. Alternatively, if a specific sensing parameter of the sensing service does not belong to the sensing 5QI, the sensing device further needs to perform clustering in terms of the parameter. For example, if the sensing 5QI of the sensing service does not include an area, the sensing function further needs to perform clustering or classification on the sensing requirements of the sensing services based on areas.

A specific process in which the sensing device classifies or clusters the sensing requirements of the M sensing services is similar to an implementation process in which the sensing function classifies or clusters the sensing requirements of the M sensing services. For a specific implementation process, refer to related descriptions in step S402. Details are not described again.

An i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N.

In other words, the i^{th} type of sensing service is a set of sensing services of one type obtained by the sensing device by classifying the sensing requirements of the M sensing services. Sensing requirements of the sensing services in the set of sensing services are the same or similar, and a set of sensing services of each type includes at least one of the M sensing services. The sensing requirement of the i^{th} type of sensing service is used to meet a sensing requirement of any sensing service in the i^{th} type of sensing service, in other words, the sensing requirement of the i^{th} type of sensing service includes the sensing requirement of any sensing service in the type of sensing service. Therefore, the sensing device performs a sensing operation based on the sensing requirement of the i^{th} type of sensing service, to obtain sensing measurement data required by each sensing service in the i^{th} type of sensing service. The i^{th} classification result further indicates the i^{th} type of sensing service, in other words, the i^{th} classification result may further indicate which sensing services in the M sensing services belong to the i^{th} type of sensing service.

The i^{th} classification result may further include an i^{th} classification identifier. The i^{th} classification identifier is used to identify the i^{th} type of sensing service and/or the sensing requirement of the i^{th} type of sensing service. In other words, the i^{th} type of sensing service and the sensing requirement of the i^{th} type of sensing service may be identified by the i^{th} classification identifier.

S603: The sensing device performs a sensing operation based on the N classification results to obtain N types of sensing measurement data.

For a specific implementation process, refer to related descriptions in step S404. Details are not described again.

S604: The sensing function receives the N types of sensing measurement data from the sensing device. The sensing device sends the N types of sensing measurement data to the sensing function.

The N types of sensing measurement data are obtained by the sensing device by performing the sensing operation based on the N classification results. In other words, an i^{th} type of sensing measurement data in the N types of sensing measurement data is obtained by the sensing device by performing a sensing operation based on the i^{th} classification result.

The sensing device may send the N types of sensing measurement data to the sensing function in the following two manners, which are specifically described below:
Manner 3: N data transmission channels are established between the sensing function and the sensing device, and the sensing device sends the i^{th} type of sensing measurement data in the N types of sensing measurement data to the sensing function through an i^{th} data transmission channel in the N data transmission channels. Optionally, the i^{th} data transmission channel is identified by the i^{th} classification identifier, or is identified by a dedicated data transmission channel identifier. The dedicated data transmission channel identifier may be allocated by the sensing function and/or the sensing device.

It may be understood that a specific implementation process of the manner 3 is similar to that of the manner 1. For details, refer to related descriptions in the manner 1. Details are not described again.

Manner 4: One data transmission channel is established between the sensing function and the sensing device, and the sensing device sends the N types of sensing measurement data to the sensing function through the data transmission channel. The i^{th} type of sensing measurement data in the N types of sensing measurement data may be identified by the i^{th} classification.

It may be understood that a specific implementation process of the manner 4 is similar to that of the manner 2. For details, refer to related descriptions in the manner 2. Details are not described again.

In conclusion, the sensing device may obtain the N classification results by classifying the sensing requirements of the M sensing services. Each classification result includes a sensing requirement of at least one of the M sensing services. Therefore, the sensing device may obtain, by performing N types of sensing operations, sensing measurement data required by each of the M sensing services. In this way, sensing resource overheads can be reduced, and sensing efficiency can be improved.

With reference to the foregoing embodiment, optionally, before the sensing device receives the sensing control request from the sensing function, the method may further include: The sensing function receives M sensing service requests, and obtains the sensing control request based on the M sensing service requests.

The M sensing service requests are in one-to-one correspondence with the M sensing services, and the sensing service request includes a sensing requirement corresponding to the sensing service. A sensing requirement of a k^{th} sensing service included in the M sensing service requests is denoted as a sensing requirement #K1 of the k^{th} sensing service, and a sensing requirement of the k^{th} sensing service included in the sensing control request is denoted as a sensing requirement #K2 of the k^{th} sensing service. The sensing requirement #K1 may be the same as or different from the sensing requirement #K2. Specifically, an area in the sensing requirement #K1 may be different from an area in the sensing requirement #K2. For example, the area in the sensing requirement #K1 may include areas of a plurality of sensing devices, and the sensing requirement #K2 includes an area of a single sensing device. Alternatively, if a sensing range of a single sensing device cannot meet a requirement of the area in the sensing requirement #K1, the sensing function needs to divide the area in the sensing requirement #K1 to obtain the sensing requirement #K2.

For a specific implementation process in which the sensing function receives the M sensing service requests, refer to related descriptions in Embodiment 1. Details are not described again.

Optionally, the method may further include: The sensing function allocates, to the M sensing services, task identifiers that are in one-to-one correspondence with the M sensing services. In other words, the sensing function allocates a k^{th} task identifier to the k^{th} sensing service in the M sensing services, and the k^{th} task identifier may indicate that a current sensing task serves the sensing service.

Optionally, after the sensing device receives the sensing control request from the sensing function, the method may further include:
The sensing device sends, to the sensing function, a sensing control response returned for the sensing control request.

A quantity of sensing control responses is the same as the quantity of received sensing control requests. In other words, each time the sensing device receives a sensing control request, the sensing device returns, to the sensing function, a sensing control response corresponding to the sensing control request. If one sensing control response is for one sensing service, M sensing control responses exist. Alternatively, if one sensing control response is for all sensing services, one sensing control response exists. This is not limited in this embodiment of this application.

The sensing control response includes N types of sensing services corresponding to the N classification results, and the i^{th} classification result in the N classification results includes the i^{th} type of sensing service in the N types of sensing services.

If the sensing function sends one sensing control request to the sensing device, the sensing device may send, to the sensing function, one sensing control response returned for the sensing control request. The sensing control response may include the N types of sensing services corresponding to the N classification results. The sensing control response may indicate that the sensing device has successfully received the sensing control request.

If the sensing function sends N sensing control requests to the sensing device, the sensing device may send, to the sensing function, N sensing control responses returned for the sensing control requests. An i^{th} sensing control response in the N sensing control responses may include the i^{th} classification result. The i^{th} sensing control response may indicate that the sensing device has successfully received an i^{th} sensing control request.

The sensing control response may further include sensing requirements of the N types of sensing services corresponding to the N classification results, and the i^{th} classification result in the N classification results may include the sensing requirement of the i^{th} type of sensing service in the sensing requirements of the N types of sensing services.

Optionally, the sensing control response may further include N classification identifiers, and an i^{th} classification identifier in the N classification identifiers is used to identify the i^{th} type of sensing service and/or the sensing requirement of the i^{th} type of sensing service. In other words, each sensing control response is identified by one classification identifier.

Optionally, after the sensing device sends, to the sensing function, the sensing control response returned for the sensing control request, the method may further include: The sensing device receives a response message returned by the sensing function for the sensing control response.

The response message is in one-to-one correspondence with the sensing control response, and a quantity of response messages is the same as the quantity of sensing control responses. It may be understood that, when the sensing control response sent by the sensing device to the sensing function does not include a classification identifier, the sensing function may send, to the sensing function, the response message returned for the sensing control response. The response message may include N classification identifiers, and an i^{th} classification identifier in the N classification identifiers may be used to identify the i^{th} type of sensing service and/or the sensing requirement of the i^{th} type of sensing service.

Optionally, the method may further include: The sensing function processes the N types of sensing measurement data to obtain respective sensing measurement data or sensing results of the M sensing services.

For example, first, the sensing function may obtain the i^{th} type of sensing service corresponding to the i^{th} type of sensing measurement data based on the i^{th} classification result and the i^{th} type of sensing measurement data; and second, the sensing function may obtain sensing measurement data corresponding to each sensing service in the i^{th} type of sensing service based on a sensing requirement corresponding to each sensing service in the i^{th} type of sensing service and the i^{th} type of sensing measurement data. The sensing measurement data of each sensing service in the i^{th} type of sensing service is a part of the i^{th} type of sensing measurement data, in other words, the i^{th} type of sensing measurement data includes the sensing measurement data of each sensing service in the i^{th} type of sensing service.

Alternatively, optionally, the sensing function may obtain a sensing result corresponding to each sensing service in the i^{th} type of sensing service based on a sensing requirement corresponding to each sensing service in the i^{th} type of sensing service and the i^{th} type of sensing measurement data. The sensing result is a sensing result that is of each sensing service in the i^{th} type of sensing service and that is obtained after the sensing function processes the i^{th} type of sensing measurement data.

For another example, the sensing function may obtain sensing measurement data corresponding to each sensing service in the i^{th} type of sensing service based on a sensing requirement corresponding to each sensing service in the i^{th} type of sensing service and the i^{th} type of sensing measurement data.

Alternatively, optionally, the sensing function may obtain a sensing result corresponding to each sensing service in the i^{th} type of sensing service based on a sensing requirement corresponding to each sensing service in the i^{th} type of sensing service and the i^{th} type of sensing measurement data.

It may be understood that for a specific implementation process of this step, reference may be made to related descriptions in Embodiment 1, and details are not described again.

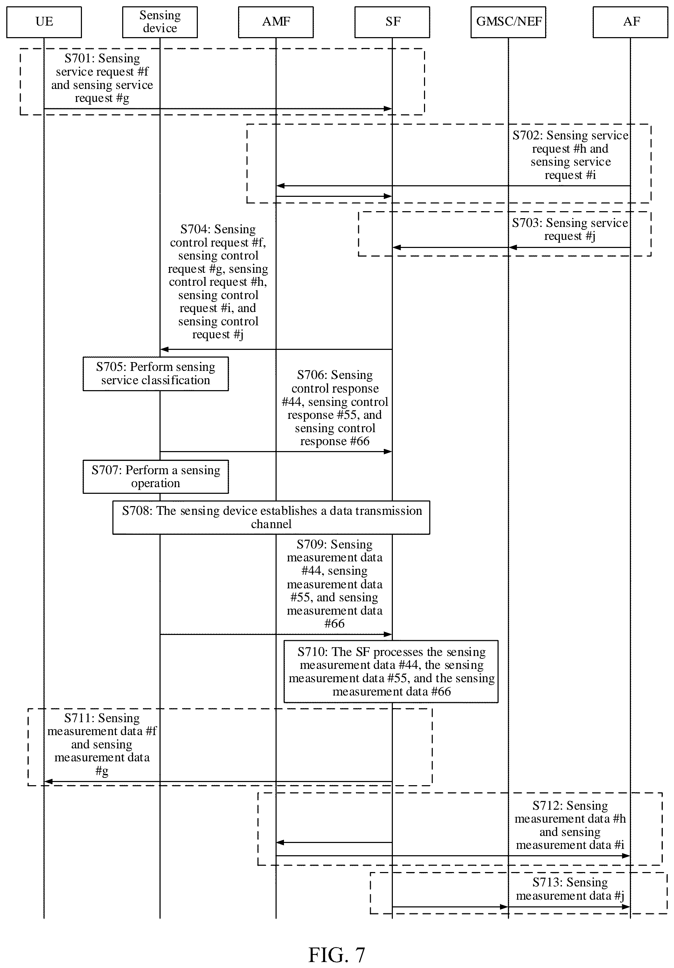

With reference to the method embodiment, the foregoing describes an overall procedure of the communication method provided in embodiments of this application. For ease of understanding, as shown in FIG. 7, the following describes the foregoing method by using a specific scenario.

Scenario 2: A sensing device classifies sensing requirements of M sensing services.

S701: A terminal sends a sensing service request #f and a sensing service request #g to an SF.

The sensing service request #f may include a service type #f and/or a sensing requirement #f, and the sensing service request #g may include a service type #g and/or a sensing requirement #g. For specific implementations of the sensing service request #f and the sensing service request #g, refer to related descriptions in step S501. Details are not described again. For a specific implementation in which the terminal sends the sensing service request #f and the sensing service request #g to the SF, refer to related descriptions in step S501. Details are not described again.

S702: An AF sends a sensing service request #h and a sensing service request #i to the SF through an AMF.

The sensing service request #h may include a service type #h and/or a sensing requirement #h, and the sensing service request #i may include a service type #i and/or a sensing requirement #i. For specific implementations of the sensing service request #h and the sensing service request #i, refer to related descriptions in step S502. Details are not described again. For a specific implementation in which the terminal sends the sensing service request #h and the sensing service request #i to the SF through the AMF, refer to related descriptions in step S502. Details are not described again.

S703: The AF sends a sensing service request #j to the SF through an NEF and/or a GMSC.

The sensing service request #j may include a service type #j and/or a sensing requirement #j. For a specific implementation of the sensing service request #j, refer to related descriptions in step S503. Details are not described again. For a specific implementation in which the AF sends the sensing service request #j through the NEF and/or the GMSC, refer to related descriptions in step S503. Details are not described again.

S704: The SF sends a sensing control request #f, a sensing control request #g, a sensing control request #h, a sensing control request #i, and a sensing control request #j to the sensing device.

The sensing control request #f may include a sensing requirement #fl, and the sensing requirement #f1 and the sensing requirement #f may indicate same content, or the sensing requirement #f1 and the sensing requirement #f may indicate different content. This is not limited. The sensing control request #g may include a sensing requirement #g1, and the sensing requirement #g1 and the sensing requirement #g may indicate same content, or the sensing requirement #g1 and the sensing requirement #g may indicate different content. This is not limited. The sensing control request #h may include a sensing requirement #h1, and the sensing requirement #h1 and the sensing requirement #h may indicate same content, or the sensing requirement #h1 and the sensing requirement #h may indicate different content. This is not limited. The sensing control request #h may include a sensing requirement #i1, and the sensing requirement #i1 and the sensing requirement #h may indicate same content, or the sensing requirement #i1 and the sensing requirement #i may indicate different content. This is not limited. The sensing control request #j may include a sensing requirement #j1, and the sensing requirement #j1 and the sensing requirement #j may indicate same content, or the sensing requirement #j1 and the sensing requirement #j may indicate different content. This is not limited.

S705: The sensing device performs sensing service classification.

The sensing device classifies the received sensing control request #f, sensing control request #g, sensing control request #h, sensing control request #i, and sensing control request #j. The sensing control request #f and the sensing control request #g are determined as a sensing service classification result #44, the sensing control request #h and the sensing control request #i are determined as a sensing service classification result #55, and the sensing control request #j is determined as a sensing service classification result #66. For a specific implementation process, refer to related descriptions in step S602. Details are not described again.

S706: The sensing device sends a sensing control response #44, a sensing control response #55, and a sensing control response #66 to the SF.

The sensing control response #44 corresponds to the sensing control request #44, and the sensing control response #44 may include the sensing service classification result #44. The sensing control response #55 corresponds to the sensing control request #55, and the sensing control response #55 may include the sensing service classification result #55. The sensing control response #66 corresponds to the sensing control request #66, and the sensing control response #66 may include the sensing service classification result #66.

S707: The sensing device performs a sensing operation.

The sensing device performs a sensing operation based on a sensing requirement of the sensing service classification result #44 to obtain sensing measurement data #44, the sensing device performs a sensing operation based on a sensing requirement of the sensing service classification result #55 to obtain sensing measurement data #55, and the sensing device performs a sensing operation based on a sensing requirement of the sensing service classification result #66 to obtain sensing measurement data #66.

S708: The sensing device establishes a data transmission channel.

The sensing device may establish a corresponding data transmission channel for each sensing service classification result. For example, the sensing device may establish a data transmission channel #44 based on the sensing service classification result #44, the sensing device may establish a data transmission channel #55 based on the sensing control request #55, and the sensing device may establish a data transmission channel #66 based on the sensing control request #66.

It may be understood that, if in step S706, the sensing control response #44 further includes a classification identifier #44, the sensing control response #55 further includes a classification identifier #55, and the sensing control response #66 further includes a classification identifier #66, the data transmission channel #44 may be identified by the classification identifier #44, the data transmission channel #55 may be identified by the classification identifier #55, and the data transmission channel #66 may be identified by the classification identifier #66. Alternatively, the data transmission channel #44, the data transmission channel #55, and the data transmission channel #66 may be identified by dedicated data transmission channel identifiers, and the dedicated data transmission channel identifiers may be allocated by the sensing function and/or the sensing device. This is not limited.

Alternatively, the sensing device may establish one general-purpose data transmission channel based on the sensing service classification result #44, the sensing service classification result #55, and the sensing service classification result #66. In this case, a data packet of the sensing measurement data #44 carries a classification identifier #44, a data packet of the sensing measurement data #55 carries a classification identifier #55, and a data packet of the sensing measurement data #66 carries a classification identifier #66.

It may be understood that, if the general-purpose data transmission channel is established, the channel may be established before steps S701 to S703. For example, the channel may be established in advance between the sensing device and the sensing function before the sensing function receives the sensing service request. For example, after the sensing device is enabled, if the sensing device supports a sensing capability, the sensing device may actively establish the general-purpose data transmission channel between the sensing device and the sensing function.

If a classification (for example, a classification #a) already exists and a data transmission channel #a is established before steps S501 to S503, if the SF receives 10 sensing service requests and classifies three of the 10 sensing service requests into a classification result #11, there is no need to newly establish a data transmission channel, and the existing data transmission channel #11 is reused.

A sequence of step S707 and step S708 may be selected based on an actual scenario. This is not limited.

S709: The sensing device sends the sensing measurement data #44, the sensing measurement data #55, and the sensing measurement data #66 to the SF.

The sensing device may send the sensing measurement data #44 to the sensing function through the data transmission channel #44, send the sensing measurement data #55 to the sensing function through the data transmission channel #55, and send the sensing measurement data #66 to the sensing function through the data transmission channel #66.

Alternatively, the sensing device may send the sensing measurement data #44, the sensing measurement data #55, and the sensing measurement data #66 to the SF through the general-purpose data transmission channel.

S710: The SF processes the sensing measurement data #44, the sensing measurement data #55, and the sensing measurement data #66.

If the SF receives sensing measurement data through the data transmission channel #44, the sensing measurement data is the sensing measurement data #44. The SF may obtain, based on a correspondence between the sensing measurement data #44, the sensing service classification result #44, the sensing control request #f, the sensing control request #g, the sensing service request #f, and the sensing service request #g, measurement data #f corresponding to the sensing service request #f and measurement data #g corresponding to the sensing service request #g in a measurement result #44.

Similarly, if the SF receives sensing measurement data through the data transmission channel #55, the sensing measurement data is the sensing measurement data #55. The SF may obtain, based on a correspondence between the sensing measurement data #55, the sensing service classification result #55, the sensing control request #h, the sensing control request #i, the sensing service request #h, and the sensing service request #i, measurement data #h corresponding to the sensing service request #h and measurement data #i corresponding to the sensing service request #i in a measurement result #44.

Similarly, if the SF receives sensing measurement data through the data transmission channel #66, the sensing measurement data is the sensing measurement data #66. The SF may determine, based on a correspondence between the sensing measurement data #66, the sensing service classification result #66, the sensing control request #j, and the sensing service request #j, a measurement result #66 as measurement data #j corresponding to the sensing service request #j.

S711: The SF sends the sensing measurement data #f and the sensing measurement data #g to the terminal.

A specific implementation process of step S711 is similar to that of step S701. Reference may be made for understanding, and details are not described again.

S712: The SF sends the sensing measurement data #h and the sensing measurement data #i to the AF through the AMF.

A specific implementation process of step S712 is similar to that of step S702. Reference may be made for understanding, and details are not described again.

S713: The SF sends the sensing measurement data #j to the AF through the NEF and/or the GMSC.

A specific implementation process of step S713 is similar to that of step S703. Reference may be made for understanding, and details are not described again.

It may be understood that, in step S710, the SF may alternatively obtain a sensing result #44 based on the measurement data #44, obtain a sensing result #55 based on the measurement data #55, and obtain a sensing result #66 based on the measurement data #66. In this case, in steps S711 to S713, the sensing measurement data #f may be replaced with a sensing result #f, the sensing measurement data #g may be replaced with a sensing result #g, the sensing measurement data #h may be replaced with a sensing result #h, the sensing measurement data #i may be replaced with a sensing result #i, and the sensing measurement data #j may be replaced with a sensing result #j. This scenario includes at least one of steps S701 to S703. This is not limited.

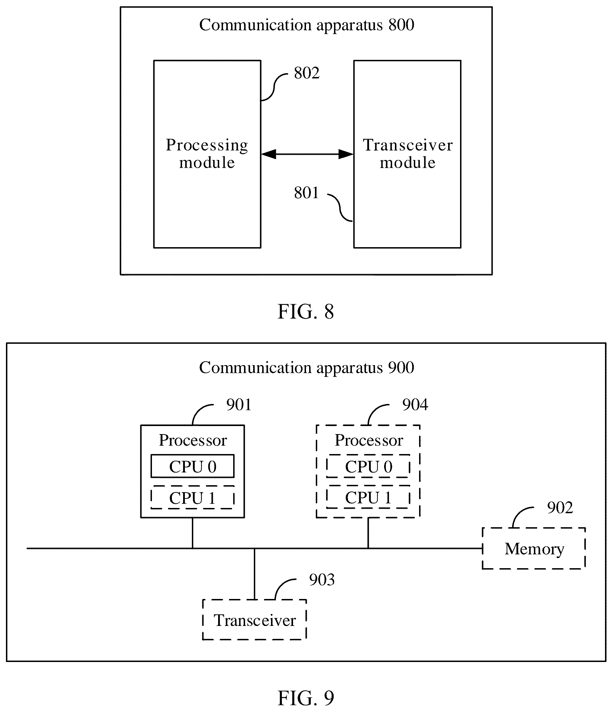

With reference to FIG. 4 to FIG. 7, the foregoing describes in detail the communication method provided in embodiments of this application. With reference to FIG. 8 and FIG. 9, the following describes in detail communication apparatuses configured to perform the communication method provided in embodiments of this application.

FIG. 8 is a diagram 1 of a structure of a communication apparatus according to an embodiment of this application. For example, as shown in FIG. 8, the communication apparatus 800 includes a transceiver module 801 and a processing module 802. For ease of description, FIG. 8 shows only main parts of the communication apparatus.

In some embodiments, the communication apparatus 800 is applicable to the communication system shown in FIG. 3, and performs functions of the application function.

The transceiver module 801 may be configured to perform functions of receiving and sending messages by the sensing function, for example, functions in steps such as S401, S403, S601, and S604. The processing module 802 may perform functions other than the functions of receiving and sending messages by the sensing function, for example, functions in steps such as S402.

For example, the transceiver module 801 is configured to receive M sensing service requests. The processing module 802 is configured to obtain N classification results based on sensing requirements of M sensing services. The transceiver module 801 is further configured to send a sensing control request to a sensing device. The M sensing service requests are in one-to-one correspondence with the M sensing services, and the sensing service request includes a sensing requirement corresponding to the sensing service. An i^{th} classification result in the N classification results indicates a sensing requirement of an i^{th} type of sensing service, i is any integer from 1 to N, the i^{th} type of sensing service includes at least one of the M sensing services, and M is greater than N. The sensing control request includes the N sensing classification results, and the sensing control request is used by the sensing device to obtain N types of sensing measurement data corresponding to the N classification results.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 may be enabled to perform the communication method.

It may be understood that the communication apparatus 800 may be a network device, for example, a sensing function, may be a chip (system) or another part or component that may be disposed in the network device, or may be an apparatus including the network device. This is not limited in this application.

In addition, for technical effect of the communication apparatus 800, refer to the technical effect of the communication methods shown in FIG. 4 to FIG. 7. Details are not described herein again.

In some other embodiments, the communication apparatus 800 is applicable to the communication system shown in FIG. 3, and performs functions of the sensing device in the foregoing methods. The transceiver module 801 may perform receiving and sending functions of the communication apparatus 800, for example, functions in steps such as S403, S601, and S604. The processing module 802 may perform functions other than the receiving and sending functions of the communication apparatus 800, for example, functions in steps such as S404, S602, and S603.

For example, the transceiver module 801 is configured to receive a sensing control request from a sensing function. The processing module 802 is configured to obtain N classification results based on sensing requirements of M sensing services. The processing module 802 is further configured to perform a sensing operation based on the N classification results to obtain N types of sensing measurement data. The sensing control request includes the sensing requirements of the M sensing services. An i^{th} classification result in the N classification results indicates an i^{th} type of sensing service and/or a sensing requirement of the i^{th} type of sensing service, i is any integer from 1 to N, the i^{th} type of sensing service includes at least one of the M sensing services, and M is greater than N. The N types of sensing measurement data are in one-to-one correspondence with the N classification results, and an i^{th} type of sensing measurement data in the N types of sensing measurement data is sensing measurement data that is of the i^{th} type of sensing service and that is obtained by the communication apparatus 800 by performing sensing based on the i^{th} classification result.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 may be enabled to perform functions of the NSMS provision entity or the network slice management function provision entity in the foregoing methods.

It may be understood that the communication apparatus 800 may be a terminal or a network device, may be a chip (system) or another part or component that may be disposed in the terminal or the network device, or may be an apparatus including the terminal or the network device. This is not limited in this application.

In addition, for technical effect of the communication apparatus 800, refer to the technical effect of the communication methods shown in FIG. 4 to FIG. 7. Details are not described herein again.

FIG. 9 is a diagram 2 of a structure of a communication apparatus according to an embodiment of this application. For example, the communication apparatus may be a terminal, or may be a chip (system) or another part or component that may be disposed in the terminal. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes in detail each part of the communication apparatus 900 with reference to FIG. 9.

The processor 901 is a control center of the communication apparatus 900, and may be one processor or may be a collective term of a plurality of processing elements. For example, the processor 901 may be one or more central processing units (central processing units, CPUs), may be an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

Optionally, the processor 901 may perform various functions of the communication apparatus 900 by running or executing a software program stored in the memory 902 and invoking data stored in the memory 902, for example, perform the communication methods shown in FIG. 4 to FIG. 7.

During specific implementation, in an embodiment, the processor 901 may include one or more CPUs, for example, a CPU 0 and a CPU 1 in FIG. 9.

During specific implementation, in an embodiment, the communication apparatus 900 may also include a plurality of processors, for example, the processor 901 and a processor 904 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

The memory 902 is configured to store a software program for executing the solutions of this application, and the processor 901 controls execution. For a specific implementation, refer to the foregoing method embodiments. Details are not described herein again.

Optionally, the memory 902 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 902 is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal, and the transceiver 903 may be configured to communicate with a network device or communicate with another terminal device. For another example, the communication apparatus 900 is a network device, and the transceiver 903 may be configured to communicate with a terminal or communicate with another network device.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901, or may exist independently, and is coupled to the processor 901 through the interface circuit (not shown in FIG. 9) of the communication apparatus 900. This is not specifically limited in this embodiment of this application.

It may be understood that the structure of the communication apparatus 900 shown in FIG. 9 does not constitute a limitation on the communication apparatus. An actual communication apparatus may include more or fewer parts than those shown in the figure, or some parts may be combined, or different part arrangements may be used.

In addition, for technical effect of the communication apparatus 900, refer to the technical effect of the method in the foregoing method embodiments. Details are not described herein again. An embodiment of this application provides a communication system. The communication system includes the sensing function or the sensing device shown in FIG. 4 to FIG. 7.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a sensing function, M sensing service requests, wherein the M sensing service requests are in one-to-one correspondence with M sensing services, and the sensing service request comprises a sensing requirement corresponding to the sensing service;
obtaining, by the sensing function, N classification results based on sensing requirements of the M sensing services, wherein an i^{th} classification result in the N classification results indicates a sensing requirement of an i^{th} type of sensing service, i is any integer from 1 to N, the i^{th} type of sensing service comprises at least one of the M sensing services, and M is greater than N; and
sending, by the sensing function, a sensing control request to a sensing device, wherein the sensing control request comprises the N sensing classification results, and the sensing control request is used by the sensing device to obtain N types of sensing measurement data corresponding to the N classification results.

2. The method according to claim 1, wherein the i^{th} classification result further indicates the i^{th} type of sensing service.

3. The method according to claim 1 or 2, wherein the sensing requirement of the i^{th} type of sensing service is used to meet a sensing requirement of any sensing service in the i^{th} type of sensing service.

4. The method according to any one of claims 1 to 3, wherein the sensing requirement of the i^{th} type of sensing service is used by a device for performing sensing to perform a sensing operation based on the sensing requirement of the i^{th} type of sensing service.

5. The method according to claim 4, wherein the i^{th} classification result further comprises an i^{th} classification identifier, and the i^{th} classification identifier is used to identify the i^{th} type of sensing service and/or the sensing requirement of the i^{th} type of sensing service.

6. The method according to claim 4, wherein after sending, by the sensing function, the sensing control request to the sensing device, the method further comprises:
receiving, by the sensing function, a sensing control response returned by the sensing device for the sensing control request, wherein the sensing control response comprises N classification identifiers, and an i^{th} classification identifier in the N classification identifiers is used to identify the i^{th} type of sensing service and/or the sensing requirement of the i^{th} type of sensing service.

7. The method according to claim 5 or 6, wherein the method further comprises:
receiving, by the sensing function, the N types of sensing measurement data from the sensing device, wherein the N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result; and
processing, by the sensing function, the N types of sensing measurement data to obtain respective sensing measurement data or sensing results of the M sensing services.

8. The method according to claim 7, wherein a data transmission channel is established between the sensing function and the sensing device, and receiving, by the sensing function, the N types of sensing measurement data from the sensing device comprises:
receiving, by the sensing function, the N types of sensing measurement data from the sensing device through the data transmission channel, wherein the i^{th} type of sensing measurement data in the N types of sensing measurement data is identified by the i^{th} classification.

9. The method according to claim 7 or 8, wherein processing, by the sensing function, the N types of sensing measurement data to obtain the respective sensing measurement data or sensing results of the M sensing services comprises:
obtaining, by the sensing function, sensing measurement data corresponding to each sensing service in the i^{th} type of sensing service based on a sensing requirement corresponding to each sensing service in the i^{th} type of sensing service and the i^{th} type of sensing measurement data; or
obtaining, by the sensing function, a sensing result corresponding to each sensing service in the i^{th} type of sensing service based on a sensing requirement corresponding to each sensing service in the i^{th} type of sensing service and the i^{th} type of sensing measurement data.

10. The method according to any one of claims 1 to 9, wherein the sensing requirement of the sensing service comprises at least one sensing parameter, and obtaining, by the sensing function, the N classification results based on the sensing requirements of the M sensing services comprises:
determining, by the sensing function, one or more sensing requirements that are in the sensing requirements of the M sensing services and that meet a preset sensing requirement as a classification result, wherein the preset sensing requirement is that types of sensing parameters are the same, and value ranges of the sensing parameters of the same type are within a preset range.

11. The method according to claim 10, wherein the sensing parameter comprises at least one of the following: a sensing precision, a resolution, a refresh rate, a delay, a detection rate, a sensing area, a miss detection rate, a false alarm rate, a confidence, and a sensing moment.

12. A communication method, wherein the method comprises:
receiving, by a sensing device, a sensing control request from a sensing function, wherein the sensing control request comprises N classification results, an i^{th} classification result in the N classification results indicates a sensing requirement of an i^{th} type of sensing service, the i^{th} type of sensing service is obtained by the sensing function by performing classification based on a sensing requirement of at least one sensing service, and the sensing control request is used by the sensing device to obtain N types of sensing measurement data corresponding to the N classification results; and
performing, by the sensing device, a sensing operation based on the N classification results to obtain the N types of sensing measurement data, wherein the N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result.

13. The method according to claim 12, wherein the i^{th} classification result further indicates the i^{th} type of sensing service.

14. The method according to claim 12 or 13, wherein the sensing requirement of the i^{th} type of sensing service is used to meet a sensing requirement of any sensing service in the i^{th} type of sensing service.

15. The method according to any one of claims 12 to 14, wherein the sensing requirement of the i^{th} type of sensing service is used by a device for performing sensing to perform a sensing operation based on the sensing requirement of the i^{th} type of sensing service.

16. The method according to claim 15, wherein the i^{th} classification result further comprises an i^{th} classification identifier, and the i^{th} classification identifier is used to identify the i^{th} type of sensing service and/or the sensing requirement of the i^{th} type of sensing service.

17. The method according to claim 15, wherein after receiving, by the sensing device, the sensing control request from the sensing function, the method further comprises:
sending, by the sensing device to the sensing function, a sensing control response returned for the sensing control request, wherein the sensing control response comprises N classification identifiers, and an i^{th} classification identifier in the N classification identifiers is used to identify the i^{th} type of sensing service and/or the sensing requirement of the i^{th} type of sensing service.

18. The method according to claim 16 or 17, wherein the method further comprises:
sending, by the sensing device, the N types of sensing measurement data to the sensing function.

19. The method according to claim 18, wherein a data transmission channel is established between the sensing function and the sensing device, and sending, by the sensing device, the N types of sensing measurement data to the sensing function comprises:
sending, by the sensing device, the N types of sensing measurement data to the sensing function through the data transmission channel, wherein the i^{th} type of sensing measurement data in the N types of sensing measurement data is identified by the i^{th} classification identifier.

20. A communication method, wherein the method comprises:
receiving, by a sensing device, a sensing control request from a sensing function, wherein the sensing control request comprises sensing requirements of M sensing services;
obtaining, by the sensing device, N classification results based on the sensing requirements of the M sensing services, wherein an i^{th} classification result in the N classification results indicates an i^{th} type of sensing service and/or a sensing requirement of the i^{th} type of sensing service, i is any integer from 1 to N, the i^{th} type of sensing service comprises at least one of the M sensing services, and M is greater than N; and
performing, by the sensing device, a sensing operation based on the N classification results to obtain N types of sensing measurement data, wherein the N types of sensing measurement data are in one-to-one correspondence with the N classification results, and an i^{th} type of sensing measurement data in the N types of sensing measurement data is sensing measurement data that is of the i^{th} type of sensing service and that is obtained by the sensing device by performing sensing based on the i^{th} classification result.

21. The method according to claim 20, wherein after receiving, by the sensing device, the sensing control request from the sensing function, the method further comprises:
sending, by the sensing device to the sensing function, a sensing control response returned for the sensing control request, wherein the sensing control response comprises N types of sensing services corresponding to the N classification results, and the i^{th} classification result in the N classification results comprises the i^{th} type of sensing service in the N types of sensing services.

22. The method according to claim 20 or 21, wherein obtaining, by the sensing device, the N classification results based on the sensing requirements of the M sensing services comprises:
determining, by the sensing device, one or more sensing requirements that are in the sensing requirements of the M sensing services and that meet a preset sensing requirement as a classification result, wherein the preset sensing requirement is that types of sensing parameters are the same, and value ranges of the sensing parameters of the same type are within a preset range.

23. A communication method, wherein the method comprises:
sending, by a sensing function, a sensing control request to a sensing device, wherein the sensing control request comprises sensing requirements of M sensing services; and
receiving, by the sensing function, N types of sensing measurement data from the sensing device, wherein the N types of sensing measurement data are obtained by the sensing device by performing a sensing operation based on N classification results, the N classification results are obtained by the sensing device by classifying the sensing requirements of the M sensing services, an i^{th} classification result in the N classification results indicates an i^{th} type of sensing service and/or a sensing requirement of the i^{th} type of sensing service, i is any integer from 1 to N, the i^{th} type of sensing service comprises at least one of the M sensing services, and M is greater than N.

24. The method according to claim 23, wherein after sending, by the sensing function, the sensing control request to the sensing device, the method further comprises:
receiving, by the sensing function, a sensing control response returned by the sensing device for the sensing control request, wherein the sensing control response comprises N types of sensing services corresponding to the N classification results, and the i^{th} classification result in the N classification results comprises the i^{th} type of sensing service in the N types of sensing services.

25. The method according to claim 24, wherein the sensing control response further comprises N classification identifiers, and an i^{th} classification identifier in the N classification identifiers is used to identify the i^{th} type of sensing service and/or the sensing requirement of the i^{th} type of sensing service.

26. The method according to any one of claims 23 to 25, wherein the method further comprises:
processing, by the sensing function, the N types of sensing measurement data to obtain respective sensing measurement data or sensing results of the M sensing services.

27. The method according to claim 26, wherein processing, by the sensing function, the N types of sensing measurement data to obtain the respective sensing measurement data or sensing results of the M sensing services comprises:
obtaining, by the sensing function, sensing measurement data corresponding to each sensing service in the i^{th} type of sensing service based on a sensing requirement corresponding to each sensing service in the i^{th} type of sensing service and an i^{th} type of sensing measurement data; or
obtaining, by the sensing function, a sensing result corresponding to each sensing service in the i^{th} type of sensing service based on a sensing requirement corresponding to each sensing service in the i^{th} type of sensing service and an i^{th} type of sensing measurement data.

28. A communication apparatus, wherein the apparatus comprises a module configured to perform the method according to any one of claims 1 to 27.

29. A communication apparatus, wherein the communication apparatus comprises a processor and a memory, the memory is configured to store computer instructions; and when the processor executes the instructions, the communication apparatus is enabled to perform the method according to any one of claims 1 to 27.

30. A computer-readable storage medium, wherein the computer-readable storage medium comprises a computer program or instructions; and when the computer program or the instructions are run on a computer, the computer is enabled to perform the method according to any one of claims 1 to 27.
